# FASCICULE DE BREVET EUROPEEN

(11) **EP 3 564 914 B1**
(45) Date de publication et mention de la délivrance du brevet: **25.03.2026**
(21) Numéro de dépôt: 19172056.4
(22) Date de dépôt: 30.04.2019
(51) Int. Cl.: G06Q 20/34, G06Q 20/38, G06Q 20/40, G07F 7/08

(54) **PROCÉDÉ ET SYSTÈME POUR EFFECTUER UN ÉCHANGE DE DONNÉES SÉCURISÉ**
VERFAHREN UND SYSTEM ZUR DURCHFÜHRUNG EINES GESICHERTEN DATENAUSTAUSCHS
METHOD AND SYSTEM FOR PERFORMING A SECURE DATA EXCHANGE

(30) Priorité: 02.05.2018 FR 1853789; 26.10.2018 US 201816171247
(43) Date de publication de la demande: 06.11.2019
(60) Demande divisionnaire: 26151746.0
(73) Titulaire: Marbeuf Conseil et Recherche, 75009 Paris (FR)
(72) Inventeur: SANGLE FERRIERE, Bruno, 75016 PARIS (FR)
(74) Mandataire: Ipsilon

(56) Documents cités:
- EP-A2- 0 778 691
- WO-A1-2016/190829
- GB-A- 2 308 001
- JP-A- H10 134 121
- US-A- 5 854 581
- US-A1- 2012 266 220
- US-A1- 2013 036 017
- US-A1- 2014 013 406

## Description

La présente invention concerne les procédés et systèmes permettant d'effectuer des échanges de données sécurisés.

### Etat de la technique

Les cartes de paiement sont très largement utilisées aujourd'hui pour effectuer des paiements sécurisés. Il est possible de débiter ou de créditer un compte bancaire associé à une carte à l'aide d'un lecteur dans lequel la carte est introduite ou duquel elle est rapprochée dans le cas d'une communication sans contact. Ce lecteur doit le plus souvent communiquer avec un serveur distant lors de la transaction, ce qui bloque parfois celle-ci si aucun réseau n'est disponible.

De plus, actuellement, lorsqu'une certaine somme d'argent doit être débitée d'un compte associé à une carte de paiement au profit de celui d'une autre personne, cette dernière doit, pour pouvoir utiliser la somme reçue avec sa carte de paiement, le plus souvent attendre que la somme correspondante ait été effectivement transférée.

Les paiements en espèces sont ainsi encouragés en l'absence de réseau et dans de nombreuses situations où les personnes souhaitent pouvoir réemployer rapidement l'argent reçu, avec les inconvénients associés à la détention d'espèces, notamment le risque de perte ou de fausses coupures.

GB 2 308 001 divulgue un lecteur de carte à puce pouvant avoir deux fentes d'insertion, pour transférer de l'argent entre les cartes insérées dans ces fentes-là.

EP 0 778 691 décrit un téléphone permettant de transférer de la monnaie électronique entre des cartes monétaires.

US 5 854 581 divulgue un système de traitement de transactions comprenant un ordinateur hôte, une machine de transaction, une première carte pour les clients et une seconde carte. La première carte comprend une mémoire pour stocker des informations de compte, des informations nécessaires au traitement d'une transaction, des informations représentant des valeurs monétaires, et une unité centrale pour exécuter le traitement de la transaction. La seconde carte comprend une mémoire pour stocker des informations nécessaires au traitement de la transaction et une unité centrale pour exécuter le traitement de la transaction. La première carte et la seconde carte transfèrent directement et mutuellement les informations représentant des valeurs monétaires sur la base d'un signal représentant l'authentification du traitement de la transaction qui est reçu de l'ordinateur hôte par l'intermédiaire de la machine de transaction.

### Résumé

Il existe un besoin pour remédier à tout ou partie de ces inconvénients, et plus généralement, trouver un nouveau moyen pour favoriser les transactions financières et, d'une façon plus générale, pour transmettre de façon sécurisée tout fichier informatique ou toute quantité inscrite dans au moins un registre lié à un tel fichier, ou indépendante.

L'invention vise à répondre à ce besoin et elle y parvient, selon l'un de ses aspects, grâce à un procédé selon la revendication 1 pour effectuer au moins un échange sécurisé au sein d'un système comportant des premier et deuxième dispositifs électroniques et un double lecteur comportant des moyens de connexion à chacun des dispositifs et une interface homme machine et au moins un serveur auquel peuvent être communiquées des informations relatives à l'échange, ce procédé comportant les étapes consistant à :
a) Etablir éventuellement une première connexion sécurisée au premier dispositif à l'aide du lecteur,
b) établir éventuellement une deuxième connexion sécurisée au deuxième dispositif à l'aide du lecteur,
c) entrer, dans le lecteur, à l'aide de son interface ou d'un appareil externe qui lui est connecté, une information relative à un échange à effectuer entre les premier et deuxième dispositifs,
d) inscrire dans le premier dispositif, à l'aide du lecteur, une information relative à l'échange,
e) inscrire dans le deuxième dispositif, à l'aide du lecteur, une information relative à l'échange, et à défaut procéder à l'annulation de l'échange,
f) éventuellement confirmer dans le premier dispositif, notamment à l'aide du lecteur, une information relative à l'échange,
g) transmettre les données relatives à ladite transaction audit au moins un serveur.

Par « échange » il faut comprendre un transfert ou une copie entre les deux dispositifs d'un fichier informatique ou d'une ou plusieurs quantités inscrites dans un ou plusieurs registres desdits dispositifs, ce transfert pouvant alors être partiel ou total. Cet échange peut correspondre à un échange ou transfert de documents mais aussi à un paiement ou toute autre transaction, financière ou non.

Il y a de préférence plusieurs serveurs. Dans la suite, ce qui est décrit pour un serveur trouve aussi à s'appliquer lorsqu'il y a plusieurs serveurs.

De préférence, le procédé comporte les étapes a) et/ou b). Les premier et/ou second dispositifs peuvent communiquer des informations au lecteur, notamment des informations relatives à un inventaire des documents enregistrés dans les dispositifs pour que le lecteur puisse les intégrer dans un menu.

Les étapes a) et b) peuvent être omises notamment si la liste des fichiers et quantités transférables est connue du lecteur indépendamment des dispositifs électroniques, par exemple si le système est restreint au transfert de certains types de fichiers ou quantités ou si l'utilisateur peut supposer la présence desdits fichiers ou quantités sur les dispositifs électroniques.

Si à l'étape e) l'inscription ne peut avoir lieu, alors le double lecteur le détectera, par exemple pour avoir attendu un temps paramétré dans le système, tel que 1 mn par exemple, sans s'être vu présenter un second dispositif électronique. Il procèdera alors à l'annulation de la transaction qui sera transmise au premier dispositif électronique si celui-ci est connecté au double lecteur ou approché à nouveau du double lecteur, ou bien, si par la suite, par l'intermédiaire d'un autre double lecteur et du serveur, transmise au second dispositif électronique lorsque ce dernier est synchronisé au serveur, ou transmise au premier dispositif électronique lorsque ce dernier est synchronisé au serveur, après que le premier double lecteur ait transmis, directement ou indirectement, l'information d'annulation à ce serveur. Le double lecteur pourra aussi inscrire l'information d'annulation sur d'autres dispositifs électroniques sans les affecter autrement que par leur utilisation en tant que vecteur d'information, cette information d'annulation pouvant être passée aux serveurs lors de leur utilisation postérieure. Ainsi, la validité de l'inscription sur le premier dispositif est conditionnelle à l'inscription sur le second dispositif de l'information relative à l'échange ; la validité de l'inscription sur le premier dispositif est communiquée, après l'inscription sur le deuxième dispositif, au premier dispositif par l'intermédiaire du double lecteur, ou ultérieurement, par l'intermédiaire du serveur puis d'un autre double lecteur.

De préférence, le procédé comporte l'étape f).

Si l'étape f) est omise alors que le premier dispositif est receveur d'un fichier ou d'un certain montant représentant une partie ou la totalité d'une quantité inscrite dans un registre, celui-ci sera crédité dudit fichier ou dudit montant lors d'une connexion ultérieure au même double lecteur, ou par l'intermédiaire d'une connexion au serveur et du même ou d'autres doubles lecteurs. Enfin, si le premier dispositif est inséré dans le double lecteur, les étapes a), d) et f) peuvent être effectuées automatiquement, sans nécessiter d'intervention manuelle.

L'étape g) peut avoir lieu juste après la transaction, par exemple moins de 5 mn après, ou plus longtemps après.

Si l'étape g) n'a pas lieu juste après la transaction, les informations relatives à l'échange peuvent être communiquées au serveur à travers les doubles lecteurs qui, par la suite, rentreront en communication avec le second dispositif électronique, ou avec le premier ou le second dispositif électronique si l'étape f) a eu lieu, ou avec un dispositif électronique sur lequel aura été transféré ultérieurement le fichier ou un autre montant issu de la quantité débitée du premier dispositif.

Par « double lecteur » on désigne un lecteur capable de mettre en œuvre l'invention et donc d'échanger simultanément et/ou successivement avec deux dispositifs électroniques selon l'invention.

Que l'échange sécurisé soit une transaction financière ou la transmission d'un simple fichier, grâce au double lecteur et selon l'invention, la connexion à un serveur distant au moment de la transaction n'est pas nécessaire, ce qui, tout en permettant une transaction sécurisée, facilite celle-ci.

### Transaction

Par « transaction » il faut comprendre la transmission d'un fichier électronique ou d'un ou plusieurs montants issus de quantités inscrites dans des registres liés audit fichier, ou indépendantes.

La transaction peut consister en un transfert d'un dispositif électronique à l'autre, avec suppression du fichier ou ajustement de la quantité transférée du dispositif électronique source du montant transféré, ou simplement d'une communication d'un fichier ou de quantités liées au fichier, ou indépendantes, pour consultation par le double lecteur, par un serveur ou bien par un autre dispositif électronique connecté au lecteur, le fichier ou la quantité restant alors sur le dispositif électronique où il est présent à l'origine et sa communication au deuxième dispositif électronique ne pouvant viser qu'à permettre à ce dernier de récupérer les informations correspondantes.

Le fichier ou les quantités peuvent représenter un nombre de points, ou un document à présenter dans certaines circonstances, en cas de contrôle, tel qu'une carte d'identité ou de réduction, ou un titre de transport. Dans ce cas, le fichier peut être conservé ou non sur le dispositif électronique à l'issue de la transaction, pour un nouveau contrôle. Il peut s'agir encore d'un document ayant ou non une date de péremption, tel qu'un bon de réduction, un forfait d'accès à des remontées mécaniques ou à d'autres équipements ou installations, un enregistrement audio, vidéo, un livre ou autre, par exemple emprunté, loué ou acheté.

Il peut s'agir encore d'une information confidentielle, par exemple un login et son mot de passe associés à un site web, ou bien une licence d'utilisation d'un logiciel ou d'un service web ,une clé électronique permettant par exemple le cryptage et décryptage de fichiers, ou un fichier d'accréditation biométrique nécessitant son utilisation pour par exemple être consulté, transmis ou transféré, comme la vérification d'une empreinte digitale ou l'exposition du visage de l'utilisateur devant une caméra, le résultat d'une mesure physique, telle que de la pression, la température, la quantité d'électricité, de gaz ou d'eau consommée par un appareil ou une organisation, ou d'une lecture d'une mesure médicale telle que la pression, le pouls ou la concentration dans le sang d'un certain type de molécules en particulier si le dispositif électronique a été placé dans le corps, ou d'un mémo nécessitant pour être dévoilé ou transféré une accréditation biométrique ou la saisie d'un code, tel qu'un mot de passe. Un tel double lecteur connecté à un écran d'ordinateur peut décrypter des documents ou vérifier leurs signatures en utilisant des clés cryptographiques placées en tant que document dans le dispositif électronique. Connecté à un clavier, le lecteur peut aussi servir à crypter ou signer des informations saisies dans celui-ci avant qu'elles ne soient envoyées à l'ordinateur et plus tard via internet. Il peut s'agir d'argent, mais l'invention couvre également l'échange d'actions au porteur, de droits d'émettre du CO₂, ou de tout type de bonus ou de malus, par exemple de points distribués lors d'un examen, au cours d'un jeu, ou de certains attributs d'un document officiel, tels que des points de permis de conduire.

Les fichiers peuvent également être marqués 'restreints' pour être empêchés par le lecteur d'être affichés ou copiés sur un périphérique connecté au lecteur, ou pour limiter ces actions en temps ou en quantité, ce qui permet, par exemple, de stocker en toute sécurité des informations relatives à l'utilisateur. ; un tel système permettant de stocker des informations requises conformément à une loi, mais sans permettre leur transfert, ou leur transfert en grande quantité.

Les fichiers peuvent porter la mention «copie autorisée» avec éventuellement le nombre de copies autorisées et indiquer également si des copies de copies et la profondeur de telles copies doivent être autorisées. Par Copie, on entend une copie du fichier créée dans le système. De telles copies peuvent être marquées comme des copies ou des copies de copies potentiellement jusqu'à une certaine profondeur en gardant cette dernière enregistée avec la copie du document. Cela permettrait, par exemple, de copier un document officiel tel qu'une carte d'identité et de transférer sa copie sur un autre appareil sécurisé.

Les fichiers peuvent être modifiables lorsqu'ils sont marqués comme tels et que la quantité qui leur est attachée est égale à la quantité maximale autorisée pour le fichier. Cette fonction permettrait, par exemple, la création automatique de reçus, ou la capacité de stockage en clair de fichiers pouvant bénéficier des fonctionnalités de sécurité du système, comme par exemple, ne pas pouvoir être dupliqués ou ne pas être dupliqués dans le système ou affichés en dehors du système.

Les fichiers peuvent être associés dans un groupe afin que le transfert d'un fichier ne puisse être traité qu'avec le transfert des autres fichiers auxquels il a été associé. Dans ce cas, les lecteurs d'autres dispositifs électroniques peuvent ne pas autoriser le transfert à partir d'un dispositif électronique de fichiers membres de groupes si ce transfert rend la quantité associée à ces fichiers trop petite pour tous les groupes de fichiers dont le fichier est membre pour être transférable. Cette fonctionnalité permettra par exemple à des groupes de fichiers d'être préparés par les utilisateurs afin qu'ils puissent ensuite les transférer rapidement vers un autre appareil. La jonction de fichiers dans des groupes peut également être marquée comme "Forte", de sorte qu'un fichier joint à un groupe d'un périphérique particulier ne peut être supprimé de ce groupe que si le fichier est marqué comme pouvant être supprimé et si la suppression a lieu sur l'appareil sur lequel le fichier a joint le groupe. Le premier fichier rejoignant le groupe peut également être rendu incapable de quitter le groupe, de sorte que tout fichier rejoignant un groupe ayant démarré avec ce fichier serait lié à ce premier fichier et non à un autre fichier ayant pu rejoindre le groupe ultérieurement. Cette fonctionnalité permettrait par exemple la signature de certains documents, où par exemple un utilisateur ajouterait une copie de son identifiant à un groupe de fichiers contenant le document qu'il souhaite endosser sans laisser la possibilité aux autres utilisateurs de supprimer cette copie d'identifiant.

Une autre fonctionnalité pourrait permettre de sceller ce groupe de fichiers, en supprimant la possibilité de démanteler un groupe de fichiers en supprimant certains de ses éléments, même sur le dispositif à partir duquel ils ont rejoint le groupe. Cette fonctionnalité pourrait être mise en œuvre, par exemple, en marquant le premier fichier rejoignant le groupe comme "Scellable", et en permettant à l'utilisateur du dispositif électronique sur lequel ce fichier était marqué comme scellable de sceller les groupes de fichiers dont il faisait partie, en excluant la possibilité pour le groupe de perdre certains de ses fichiers membres, ou éventuellement d'être rejoint par un nouveau fichier membre. Cette fonctionnalité permettrait par exemple de conserver en sécurité l'endossement de documents qui seraient endossés par des personnes qui auraient accepté, de manière potentiellement irréversible, de placer une copie de leur identité sur un groupe de fichiers contenant le document. Certains fichiers peuvent être marqués pour ne pouvoir jamais être scellés à un groupe, ou pour être autorisés à quitter un groupe quoi qu'il advienne de ce groupe, afin par exemple de ne pas permettre aux fichiers représentant de l'argent de ne pas être échangés librement s'ils sont définitivement attachés à un groupe. Les fichiers joints à un groupe scellé peuvent également être utilisés pour empêcher le transfert de ce groupe de fichiers, à moins qu'un fichier dérivé d'un modèle inclus dans le groupe scellé, ou que l'original de la copie d'un document placé à l'intérieur du groupe scellé ne soit présent sur le périphérique auquel il est destiné à être transféré. Cela permettrait, par exemple, de limiter les mouvements ou la distribution de certains documents à des appareils qui, par exemple, porteraient une carte de membre valide.

De même, un fichier pourrait avoir la capacité d'activer un relais intégré au lecteur ou attaché au lecteur en tant que périphérique, ou bien d'appliquer une tension sur une borne du périphérique, si ledit fichier est groupé à une copie de carte ou bien à un modèle de document, et que l'original de la carte ou bien un document valide issu dudit modèle se trouve sur un second dispositif électronique approché dudit lecteur. Cette fonctionnalité pourrait par exemple servir à commander des équipements ou bien des serrures de portes. Le lecteur sera alors de préférence intégré à l'équipement ou à la serrure qu'il est censé commander et pourra même être agencé si nécessaire pour fonctionner avec un second dispositif électronique approché des deux côtés de la porte sur laquelle se trouve ledit lecteur.

Chaque dispositif électronique est associé à un compte dont la gestion est assurée par un ou plusieurs serveurs extérieurs au double lecteur.

Le ou les serveurs enregistrent toutes les transactions liées au compte mais aussi les fichiers et quantités inscrites sur les registres des dispositifs électroniques. Ces transactions leurs sont rapportés au moment des transactions, ou ultérieurement. Les opérations affectant un fichier ou une quantité sont validées par les serveurs et inscrites comme telles sur ceux-ci dès lors que les serveurs connaissent toutes les transactions qui lient un fichier ou une quantité transférés à un dispositif électronique qui contenait les fichier ou quantités 'initiaux', eux-mêmes préalablement inscrits et validés par les serveurs à la suite d'autres transactions ou modifiés par une application externe autorisée à cet effet ; ceci permet de s'assurer d'une part que chaque transaction ne débite ou crédite un compte qu'une fois, et d'autre part que tout crédit d'une quantité d'un compte est compensé par le débit d'une quantité d'un autre compte si la transaction correspond à un transfert, et non à une consultation. Par exemple si un dispositif électronique A transmet un fichier ou une quantité à un dispositif électronique B qui le transmet à un dispositif électronique C, la présence du fichier ou la valeur de la quantité inscrite sur le dispositif électronique C ne sera pas validée par les serveurs avant que ceux-ci n'aient été informés des deux transactions : de A à B et de B à C (chaînage). Ce processus d'information pourra être mis en œuvre lors de la synchronisation du dispositif électronique porteur de la dernière transaction, les transactions intermédiaires étant inscrites sur celui-ci au cours de cette dernière transaction. Les fichiers et quantités peuvent aussi être mis à jour par l'intervention d'un système informatique extérieur au système et habilité à faire cette opération. Par exemple, le système informatique d'une société émettant des cartes de réduction pourra se connecter aux serveurs pour déposer sur le compte d'un dispositif électronique un fichier correspondant à une de ses cartes de réduction. Les serveurs communiqueront ce fichier au dispositif électronique concerné lors de leur connexion au dispositif électronique, à travers un double lecteur lui-même connecté aux serveurs.

Une transaction peut être soumise à certaines contraintes, en fonction par exemple de la nature de ce qui est transféré; ainsi, une quantité peut être contrainte de varier au sein d'une plage prédéfinie de valeurs, avec le cas échéant une possibilité de variation par incréments prédéfinis. Typiquement un compte en devise aura un solde qui variera avec un incrément multiple de centièmes d'unités, un minimum de 0 et un maximum fixé. Le double lecteur pourra opérer ainsi le transfert de quantités inscrites sur un registre d'un premier dispositif électronique à partir ou vers le registre d'autres dispositifs électroniques en veillant à ce qu'à l'issue de chaque transfert certaines règles présentes dans les double lecteurs au moment du transfert soient respectées pour chacune des valeurs initiales desdits registres incrémentées des quantités reçues et auxquelles ont été soustraites les quantités envoyées ; ces règles peuvent être notamment de rester supérieur ou égal à zéro et inférieur à un maximum. Le système peut être conçu pour associer une quantité à tout fichier qui par ailleurs ne serait pas associé à une quelconque quantité, lui assigner un incrément de 1, un minimum de zéro et un maximum de 1 ; le système peut ainsi permettre la transmission du fichier tout en s'assurant que ledit fichier ne soit présent à tout moment que sur un seul des dispositifs électroniques du système en utilisant des procédures de validation conçues pour le transfert des quantités.

L'authenticité sur un dispositif électronique d'un fichier ou d'une quantité faisant l'objet de transactions est de préférence assurée par le fait que ce fichier ou cette quantité peuvent être rendus indisponibles sur un dispositif électronique dès lors que celui-ci est transféré à un autre dispositif électronique, ou que, si la transaction est partielle, le montant transféré de la quantité d'un premier dispositif électronique vers un second est retranchée à la quantité du premier dispositif avant ou en même temps d'être ajouté à la quantité inscrite sur le registre du second dispositif électronique ; de plus, un contrôle peut être installé pour que ce montant transféré ne soit pas plus grand que la quantité inscrite initialement sur le registre du premier dispositif électronique.

Il est possible par exemple de faire en sorte que l'objet du transfert soit constitué de billets virtuels de valeur, dont le total des quantités à travers le système correspond à un solde sur un compte bancaire. Le fichier pourra représenter la monnaie virtuelle, et la quantité représenter la valeur du billet. La transaction peut s'opérer sur ces billets virtuels. Le propriétaire du compte bancaire émettant ces billets virtuels pourra, à travers son application externe, autoriser le système à augmenter la quantité associée au fichier d'un dispositif électronique d'un certain montant contre crédit du même montant mais en vraies devises sur ledit compte bancaire, par le détenteur du dispositif électronique ; et inversement, s'engagera à créditer le compte bancaire d'une tierce personne contre le débit de la quantité associée auxdits billets virtuels, inscrite sur un dispositif électronique détenu par la tierce personne. Pour transférer une somme d'argent d'un premier dispositif électronique vers un second, un utilisateur peut transférer tout ou partie de la quantité associée à ce billet virtuel présent sur son dispositif électronique ainsi que le fichier informatique associé à ce billets virtuel -s'il n'y figure pas déjà - vers un second dispositif. De préférence, l'émetteur des billets virtuels ne créditera le compte bancaire de la tierce personne que si la quantité à débiter a été validée par les serveurs.

Un même dispositif électronique peut être agencé pour réaliser des transactions portant en même temps et conditionnellement sur des fichiers et quantités différents. Par exemple, un fichier et une quantité du dispositif électronique mémorise un nombre de tickets de transport disponible sur le dispositif, tandis qu'un autre fichier et une autre quantité mémorise une somme d'argent disponible sur le dispositif.

Les fichiers et quantités (fichiers électroniques et/ou quantités associées inscrites sur des registres) peuvent provenir et être mises à jour, à travers les serveurs, par une application externe tierce, appartenant par exemple à une entreprise émettrice du fichier ou de la quantité inscrite, comme un marchand de titres de transport ou une banque.

L'émetteur pourra - attribuer aux fichiers ou quantités qu'il émet des informations qui permettent une certaine fongibilité avec des billets virtuels émis par d'autres banques ; le double-lecteur est alors autorisé à afficher la somme totale des quantités associées à la même devise et à recevoir des instructions de transfert globales sur cette devise de telle sorte que l'utilisateur n'ait pas à mentionner les banques émettrices liées aux billets virtuels, le double lecteur se chargeant de décomposer chaque transfert global en transferts correspondant aux divers billets virtuels présents sur le dispositif électronique débité.

La transaction entre les deux dispositifs électroniques via le double lecteur peut avoir lieu sans connexion à un serveur distant. Il est cependant possible, notamment pour assurer une synchronisation immédiate avec les serveurs des opérations effectuées et/ou un contrôle, de connecter lors de la transaction le double lecteur aux serveurs. Dans ce cas, le double lecteur peut être connecté à un réseau de données cellulaires tel que 3G, ou à un appareil externe, par exemple un microordinateur, un téléphone ou une borne dédiée, connecté à internet. Pour effectuer une transaction avec une application externe tierce, l'utilisateur pourra donc utiliser un appareil externe connecté au double lecteur grâce auquel il pourra choisir celui des deux dispositifs électroniques reliés au double lecteur avec lequel il veut interagir, et sélectionner aussi le fichier et/ou la quantité éventuelle qu'il souhaite envoyer ou recevoir.

Avant chaque transaction, une quantité 'disponible' égale à la quantité enregistrée augmentée des transactions créditrices et diminuée des transactions antérieures débitrices peut être calculée, et toute transaction visant à débiter ce compte au-delà de ce solde disponible pourra être refusée. Une quantité 'disponible sûre 'pourra être aussi calculée correspondant à la quantité, diminuée des transactions débitrices antérieures sur cette même quantité. Cette quantité calculée peut être qualifiée de sûre dans la mesure où elle ne prend pas en compte les transactions créditrices qui n'ont pas encore été validées par les serveurs.

Le double lecteur pourra générer des transactions en les enregistrant sur chacun des dispositifs électroniques débités ou crédités et en recopiant le cas échéant le fichier sujet du transfert sur le dispositif crédité s'il ne s'y trouve pas déjà.

Le double lecteur, pour effectuer un transfert de quantités, pourra décomposer ce transfert en sous transferts associés
- à la quantité présente sur le dispositif électronique,
- ou à des crédits écrits sur celui-ci issus de transactions antérieures,
tout en vérifiant pour chaque sous-élément débité, quantité ou transaction précédente, que le montant débité n'excède pas la quantité sûre, ou pour les transactions précédentes, le montant de la transaction créditrice initiale diminué des montants des transactions débitrices qui ont pu lui avoir été associées dans le passé.

Il est possible de prévoir des fonctionnalités visant à limiter les transactions ; par exemple imposer une limite maximale de quantité, ou de montant de transaction.

Les transactions, fichiers et quantités inscrits sur les dispositifs électroniques peuvent être communiqués aux serveurs à chaque connexion suffisamment longue de ceux-ci via internet.

Les doubles lecteurs peuvent servir de relais pour informer les serveurs qui répertorient les transactions provenant de dispositifs électroniques avec lesquels ils auront communiqué, mais sans forcément avoir généré lesdites transactions.

Lors, ou après une connexion d'un dispositif électronique à un serveur, ce dernier peut valider de façon unique les transactions et calculer de nouveaux fichiers et quantités pour le dispositif ainsi que :
- une liste de transactions qui peuvent en être effacées lors de cette connexion ou d'une prochaine,
- une liste de transactions qui doivent y être apportées ou qui doivent être effacées lors de la mise à jour du solde,
- une liste de transactions rapportées aux serveurs par d'autres dispositifs électroniques et lecteurs mais non encore présentes sur le dispositif électronique en question, notamment si une transaction a créé un débit sur un dispositif électronique mais que la transaction créditrice correspondante n'a pas été communiquée au dispositif crédité, par exemple si son utilisateur a omis d'accoler sa carte au lecteur une dernière fois au cours de l'opération, ou si la transaction débitrice avec contrepartie inconnue notée sur la carte n'a pu être remplacée par la même transaction mais comportant l'identifiant de la contrepartie.

Lors d'une nouvelle connexion du dispositif ou lors de la même connexion si celle-ci dure suffisamment longtemps, les actions liées à chacune de ces listes citées ci-dessus ainsi que l'éventuelle mise à jour des fichiers et quantités peuvent être effectuées.

Le système peut être configuré pour que, quand cela est nécessaire, les mises à jour de certaines transactions et de certaines quantités et fichiers soient concomitantes. Par exemple si la mise à jour consiste à intégrer dans une quantité une transaction représentant un apport de 1, cette transaction sera supprimée du dispositif en même temps que le registre contenant la quantité sera incrémenté de 1.

### Dispositif électronique

Le dispositif électronique selon l'invention est de préférence compatible avec les terminaux de paiement existants.

De préférence, le dispositif électronique est au format normalisé d'une carte de crédit, tel que défini par la norme ISO 7810. Il peut s'agir en variante d'un téléphone portable ou d'une carte de type carte SIM enfichable dans un téléphone portable.

Lorsque sous forme de carte, le dispositif dispose avantageusement d'une puce munie d'un connecteur permettant de l'enficher dans le double lecteur et de communiquer avec ce dernier.

Le dispositif électronique peut aussi être équipé d'un système permettant de communiquer avec le double lecteur par une liaison sans contact, par exemple un système RFID.

Le dispositif électronique peut contenir une clé symétrique protégée ou une clé privée protégée et une mémoire, par exemple de la mémoire flash cryptée à l'aide de la clé du dispositif, et éventuellement un processeur. La mémoire contenant la clé st de préférence protégée physiquement pour que son accès physique entraine sa propre destruction avant que l'information qui s'y trouve n'en soit extraite. Le détenteur du dispositif ne pourra plus utiliser celui-ci et devra contacter l'opérateur d'un serveur central qui, si celui-ci peut identifier le dispositif électronique et dispose des procédures appropriées et adaptées à l'usage du système, pourra éventuellement récupérer, à partir du serveur, des fichiers et quantités présents sur le dispositif électronique et les placer sur un nouveau dispositif électronique.

Le dispositif électronique peut comporter une source d'énergie électrique, par exemple une pile, un système d'induction, ou une capacité, super-capacité ou accumulateur, qui est rechargé lors de la connexion à un lecteur ou autrement. Le dispositif peut également inclure certains capteurs tels que, par exemple, la température, la pression, le positionnement et peut également créer ou compléter certains documents utilisant ces capteurs.

Le dispositif électronique peut éventuellement disposer d'une interface permettant une communication directe, unidirectionnelle ou bidirectionnelle, avec un serveur distant, par exemple par utilisation d'un réseau sans fil à basse consommation énergétique tel que BLE (Bluetooth Low Energy), Sigfox, Lora, 4G LTE, etc. Cette communication avec le serveur peut être utilisée, quand elle est disponible, pour accélérer la synchronisation des données entre le dispositif électronique et le serveur.

Le dispositif électronique peut aussi être équipé d'un écran, mais aussi d'un mini clavier, l'écran permettant par exemple d'afficher des documents ou bien des soldes, et le mini clavier permettant éventuellement par exemple de choisir ce qui est affiché, ou bien même de déporter certaines fonctionnalités du clavier du double lecteur sur le dispositif, telles que la faculté d'approuver une transaction.

Le dispositif électronique peut être agencé pour réaliser tout ou partie des opérations suivantes :
- vérifier avant toute communication avec un lecteur que celui-ci fait partie des lecteurs autorisés,
- n'accepter que des informations cryptées dont il est destinataire,
- crypter et signer toute information sortante à destination d'un lecteur ou d'un serveur.

Les informations enregistrées sur le dispositif électronique comportent
- historique des dernières transactions non encore validées par le ou les serveurs,
- liste des transactions effectuées par le dispositif avec d'autres dispositifs électroniques non encore enregistrées sur les serveurs distants, permettant aux serveurs de chainer chaque transaction sur le dispositif à une quantité ou un fichier d'un autre dispositif électronique, même si ces transactions n'ont pas par ailleurs été communiquées aux serveurs,

Les informations enregistrées sur le dispositif électronique peuvent être tout ou partie des informations suivantes :
- Copie des fichiers informatiques et des quantités,
- code NIP pour éventuellement autoriser les transactions lorsque le dispositif électronique est enfiché dans le double lecteur ou communique autrement avec celui-ci,
- numéro d'identifiant du dispositif électronique,
- clé privée du dispositif électronique indisponible en dehors dudit dispositif.

On pourra aussi enregistrer au sein du dispositif électronique pour chaque fichier et quantité ou type de fichier et type de quantité un minimum, un maximum et un incrément autorisé ainsi que des règles éventuelles contraignant leur transfert.

### Double lecteur

Le double lecteur, qui peut encore être appelé « lecteur » est adapté à établir une connexion sécurisée avec les dispositifs électroniques selon l'invention pour effectuer une transaction. Il dispose ainsi de moyens de communiquer avec ces dispositifs électroniques.

Cette connexion peut impliquer un contact physique entre chacun des dispositifs électroniques et le double lecteur. En variante, cette connexion peut se faire sans contact, par une liaison radio, notamment de type NFC. Les doubles lecteurs peuvent être agencés pour pouvoir permettre des échanges sécurisés avec les dispositifs électroniques dans des endroits différents à travers deux double-lecteurs liés par une connexion informatique. On pourra alors éventuellement restreindre ce type d'utilisation aux cas ou l'un des dispositifs électroniques a un propriétaire dont l'identité sera révélée au détenteur du second dispositif électronique avant que celui-ci ne fasse la transaction.

Le double lecteur a la possibilité d'être contrôlé par un ordinateur, un téléphone ou un système électronique conçu à cet effet. Ceci peut être utile en particulier si l'ordinateur ou le téléphone fait fonction de caisse enregistreuse, d'automate bancaire, ou de vendeur de tickets de train par exemple. Les doubles lecteurs peuvent inclure certains capteurs dont la lecture est utilisée dans la création ou la mise à jour de documents. Le lecteur double peut également être connecté à certains périphériques, par exemple des capteurs dont la lecture peut être utilisée lors de la création ou la mise à jour de documents, ou des dispositifs biométriques, dont la lecture peut être utilisée pour porter une accréditation biométrique au lecteur. Le double lecteur peut inclure une certaine capacité à générer automatiquement des documents et à les placer sur l'un des appareils électroniques auxquels il est connecté. Ce document généré automatiquement pourrait être, par exemple, une mesure physique telle que la mesure d'une position ou d'une température, par exemple, ou de la concentration d'une molécule dans un liquide. Le double lecteur peut également incorporer un ou plusieurs des dispositifs électroniques, la fonctionnalité du ou des dispositifs électroniques incorporés pouvant éventuellement être capable de rester en fonctionnement lorsque la fonctionnalité «double lecteur» est désactivée. Le double lecteur pourra aussi être intégré dans un autre objet, comme un téléphone, un ordinateur, un sac à main ou autre, sans forcément nécessiter que cet autre objet ne soit forcément connecté au réseau lors de transactions avec des dispositifs électroniques.

Dans un exemple de mise en œuvre de l'invention, l'un des dispositifs électroniques est une carte qui est introduite dans un lecteur de carte correspondant au double lecteur; la connexion avec l'autre dispositif électronique, qui peut également être une carte, peut s'effectuer sans contact tandis que la première carte est engagée dans le lecteur. Dans cet exemple donc, la première connexion est par contact et la deuxième est sans contact.

Le double lecteur peut être agencé pour permettre l'échange d'informations simultané avec les deux dispositifs électroniques alors que ceux-ci lui sont connectés, par contact ou sans contact.

En variante, l'échange d'informations est asynchrone, et le double lecteur est agencé pour n'échanger des informations qu'avec un seul dispositif électronique à la fois; on effectue dans ce cas des connexions successives avec les dispositifs électroniques pour effectuer la transaction.

Le double lecteur est agencé pour se connecter à un serveur externe, pendant qu'une transaction est effectuée entre deux dispositifs électroniques, ou en dehors d'une telle transaction.

Le double lecteur peut se présenter sous la forme d'un terminal de paiement tel que ceux utilisés aujourd'hui pour effectuer un paiement à l'aide d'une carte bancaire dans un magasin, ou bien sous la forme d'un lecteur disposant d'un clavier semblable aux lecteurs personnels de cartes utilisés pour accréditer une connexion à une interface bancaire, mais permettant d'entrer des informations relatives à l'échange. Le double lecteur peut disposer à la fois d'un lecteur de carte par contact et d'un lecteur de carte sans contact, notamment de type NFC.

Les lecteurs doubles peuvent être regroupés dans un même appareil formant un 'double lecteur multiple', ce qui permet alors les transferts entre plusieurs paires d'appareils électroniques connectés directement au 'double lecteur multiple' ou via une connexion à des doubles lecteurs distants, comme décrit plus loin. Par exemple, le 'double lecteur multiple' pourrait avoir des emplacements pour de nombreux dispositifs électroniques internes, ce qui permettrait des transactions vers d'autres dispositifs électroniques connectés à des lecteurs doubles distants, eux-mêmes connectés au 'double lecteur multiple' à travers un réseau informatique ou l'internet. Ces 'doubles lecteurs multiples' pourraient, par exemple, être utilisés par des sites Web de magasins en ligne pouvant ainsi gérer leurs paiements à l'aide d'un seul 'double lecteur mutiple'.

Plusieurs dispositifs électroniques peuvent également être groupés en un seul dispositif. Un tel regroupement permettrait à des 'doubles lecteurs multiples' de traiter des transactions en utilisant de tels dispositifs électroniques sans que l'opérateur des doubles lecteurs multiples ait besoin de gérer une pluralité de dispositifs électroniques.

Le double lecteur peut disposer d'une interface permettant sa connexion à un réseau informatique, par exemple internet via un réseau 3G, 4G, 5G ou Wifi, un réseau Mesh ou un réseau local connectés à internet, le cas échéant via un ordinateur ou un téléphone. L'interface homme machine du double lecteur peut comporter un clavier, de préférence à touches, et au moins un écran; le système permet alors d'afficher deux messages à destination des porteurs des premier et deuxième dispositifs respectivement.

En variante, l'interface homme machine du double lecteur comporte une interface vocale. L'interface du double lecteur peut aussi comporter des moyens d'identification des détenteurs des dispositifs électroniques, comme la possibilité d'entrer un code NIP ou un système biométrique qui pourront, après prise en compte de documents identifiant lesdits détenteurs portés par lesdits dispositifs électroniques, valider l'adéquation d'un dispositif électronique et de son détenteur.

L'interface homme machine du double lecteur peut permettre de :
- valider la connexion à un dispositif électronique inséré dans le lecteur ou qui lui est connecté autrement,
- sélectionner éventuellement le fichier ou la quantité à transférer,
- éventuellement entrer une quantité relative à la transaction, par exemple une somme d'argent à transférer, et indiquer s'il s'agit d'un envoi ou d'une réception pour le dispositif électronique correspondant,
- afficher des messages éventuellement tête-bêche à destination des utilisateurs respectifs des deux dispositifs électroniques,
- permettre aux utilisateurs d'afficher le solde et/ou une ou plusieurs quantités, associés ou non à un fichier, de leurs dispositifs électroniques,
- permettre de changer le code NIP,
- permettre éventuellement de changer le contenu d'un fichier si ceci est autorisé pour ce fichier,
- permettre éventuellement la création de fichiers et de quantités associées.

L'interface homme machine peut permettre d'afficher une ou plusieurs quantités associées au transfert avant confirmation de la transaction; le fichier relatif à la transaction peut également être affiché ou lu, en particulier s'il s'agit d'un fichier audio ou vidéo ; des instructions à destination des utilisateurs peuvent aussi être affichées ou lues.

Le cas échéant, l'interface homme machine est déportée sur un autre appareil avec lequel le double lecteur communique par une liaison filaire ou sans fil, tel que par exemple un ordinateur, une caisse enregistreuse, une serrure électronique ou un téléphone portable.

Le double lecteur dispose de préférence de moyens nécessaires pour effectuer les transactions décrites ci-dessus et donc de signer des messages avec la clé informatique qui l'identifie, de la faculté de calculer des quantités disponibles et notamment des quantités disponibles sûres, de créer des messages représentant par exemple des transactions ou instructions qui seront enregistrés dans les dispositifs électroniques et de moyens permettant aux serveurs d'écrire, lire et effacer à volonté sur les dispositifs électroniques des quantités inscrites dans des registres, des transactions et des listes de lecteurs autorisés.

De préférence, le double lecteur possède tout ou partie des éléments suivants:
une connexion pour liaison filaire avec un microordinateur ou autre terminal, par exemple de type USB,
une connexion sans fil avec un microordinateur ou téléphone, par exemple de type Bluetooth,
une connexion sans fil pour établir une liaison avec un dispositif électronique selon l'invention, par exemple de type Bluetooth, ou RFID
un connecteur par contact pour communiquer avec un dispositif électronique selon l'invention si celui-ci est inséré dans le lecteur,
une horloge interne synchronisée à chaque connexion avec le serveur et permettant l'horodatage des transactions et soldes, cette horloge étant de préférence précise, par exemple à +/-5 secondes par mois,
une mémoire protégée physiquement, comportant la clé privée du double lecteur et dont, de préférence, l'accès physique entraine sa propre destruction avant que l'information qui s'y trouve n'en puisse être copiée,
au moins une mémoire dont le contenu est crypté par sa propre clé privée et dans laquelle peuvent être enregistrées tout ou partie des informations suivantes:
   un code identifiant le double lecteur,
   une liste des dernières transactions effectuées via le double lecteur et des fichiers correspondants,
   une liste tampon de transactions effectuées par d'autres lecteurs, de transactions ou soldes frauduleux ou toute autre donnée que des serveurs veulent communiquer à des dispositifs électroniques ou que des dispositifs électroniques veulent communiquer aux serveurs,
   les listes de clés partagées ou publiques des serveurs et dispositifs électroniques ainsi que, éventuellement, des clés privées, chacune associée à un serveur ou à un dispositif électronique et devant être utilisée pour communiquer et s'identifier avec ce serveur ou dispositif électronique.

Le double lecteur peut être agencé pour effectuer tout ou partie des opérations suivantes :
Lire un code NIP et un identifiant du dispositif électronique qui lui est connecté, calculer des quantités disponibles,
effacer, écrire ou conserver des transactions,
faire signer des messages par le dispositif électronique qui lui est connecté,
mettre à jour sur le dispositif électronique des listes de lecteurs et serveurs autorisés, suivant le système de sécurité adopté.

L'invention a encore pour objet le double lecteur, considéré en tant que tel.

### Serveurs

Ce sont des systèmes informatiques distants qui contiennent des comptes associés à chaque dispositif électronique et double lecteur sur la base des transactions effectuées par les dispositifs électroniques associés, ou sur la base d'instructions provenant d'une application externe autorisée qui pourrait apporter ou retirer des fichiers et modifier des quantités.

Le ou les serveurs comportent au moins une mémoire sur laquelle sont enregistrées tout ou partie des informations suivantes :
1. pour chaque dispositif électronique ;
   une copie des transactions n'ayant pas encore donné lieu sur ce dispositif à un changement de la quantité ou du fichier auquel se rapportent la transaction, et leurs fichiers associés, une autre copie étant enregistrée sur le dispositif électronique correspondant ; chaque transaction qui aura été validée par le serveur sera marquée comme telle ;
   - quantités et fichiers enregistrés sur les dispositifs électroniques ;
   - informations permettant d'identifier les listes de clés présentes sur le dispositif électronique ;
2. pour chaque double lecteur
   - informations permettant d'identifier les listes de clés présentes sur le double lecteur.
3. clé privée du serveur, de préférence protégée physiquement, ou une liste de clés privées, de préférence physiquement protégées, chacune de ces clés étant utilisée pour s'identifier avec certains dispositifs ou doubles lecteurs individuels ou groupes de tels doubles lecteurs, ainsi que leurs clés publiques associées.
4. liste des clés publiques des double-lecteurs,
5. liste des clés publiques des dispositifs électroniques,
6. liste des clés publiques des autres serveurs.

Les serveurs communiquent entre eux et peuvent par exemple se répartir les informations par dispositif électronique et par double lecteur ; ceci peut permettre de conserver les informations relatives à tel ou tel double lecteur ou à tel ou tel dispositif électronique, sur tel ou tel serveur ; ceci peut encore permettre au serveur auquel se connecte tout double lecteur de lire et modifier ou faire modifier ces informations quand cela est nécessaire. Le système peut ne comporter qu'un seul serveur, réduisant ainsi la complexité du système.

Les serveurs peuvent être agencés pour refuser toute transaction visant à débiter une quantité d'un montant qui lui est supérieur et marquer une telle transaction comme frauduleuse; cette information pourra être communiquée au dispositif électronique lors de la prochaine connexion. La transaction marquée comme frauduleuse ne sera alors plus prise en compte. Les transactions dépendant de transactions frauduleuses pourront aussi être annulées ou marquées comme frauduleuses.

Les serveurs pourront marquer les transactions comme valides dès lors que notamment les vérifications suivantes auront été faites :
- qu'elles concernent des dispositifs électroniques et double lecteurs valides lors de ladite transaction ;
- soit qu'elles débitent une quantité issue d'une transaction elle-même ayant été validée par les serveurs avant cette vérification, soit qu'elles débitent des quantités ou fichiers inscrits auparavant par les serveurs sur un dispositif électronique, soit qu'elles débitent des fichiers créés ex-nihilo à l'aide d'un double lecteur et non encore transmis ;
- qu'elles respectent les règles imposées à une telle transaction au moment de cette transaction, telles que par exemple :
   ∘ l'impossibilité de débiter une quantité inscrite dans un registre d'un montant qui lui est supérieur si cette règle est applicable à cette quantité;
   ∘ l'impossibilité de débiter un montant supérieur à une quantité inscrite sur le registre d'un dispositif électronique ajustée de montants d'autres transactions antérieures à la transaction vérifiée et que ce montant débiterait, si cette règle est applicable à cette quantité ;
   ∘ L'impossibilité de faire la transaction si d'autres transactions liées ne sont pas effectuée en même temps et que ces transactions n'ont pas toutes été effectuées, une de ces transactions liées pouvant, par exemple nécessiter un contrôle biométrique.

Les informations sur les transactions pourront comporter les informations concernant la quantité présente dans le dispositif électronique crédité qui pourraient être nécessaires à la validation de la transaction par les serveurs.

Les serveurs peuvent être agencés pour ne calculer et mettre à jour une quantité que s'ils ont connaissance de toutes les transactions marquées comme validées de dispositif à dispositif qui lient chaque crédit à un débit d'une quantité déjà validée. De cette façon, aucune transaction provenant d'un lecteur ou d'un dispositif électronique non inscrit dans les serveurs ne pourra donner lieu à des variations de quantités. De plus, ceci permettra aux serveurs de créditer des quantités sur des dispositifs électroniques sur la base des mêmes transactions liées à des débits sur d'autres dispositifs électroniques, s'assurant ainsi de la pérennité à travers tous les dispositifs électroniques de la valeur totale des quantités, ajustées de toutes les transactions validées mais non encore prises en compte par les quantités inscrites sur les dispositifs électroniques. Les serveurs pourront aussi être agencés pour calculer et mettre à jour les quantités débitées et créditées par une même transaction simultanément. Les serveurs garderont alors en mémoire d'une part la quantité inscrite sur le dispositif électronique, et d'autre part la quantité mise à jour par le serveur mais non encore inscrite sur ledit dispositif électronique, à laquelle sera liée la transaction qui aura servi à la mise à jour et qui devra être supprimée dudit dispositif électronique lors de la recopie de la quantité nouvellement calculée sur ledit dispositif.

Pour faciliter ce chainage, les dispositifs électroniques pourront contenir une copie des autres transactions ayant été effectuées avant le débit d'une quantité ou d'un fichier, ces transactions permettant de lier ce débit à des fichiers ou quantités initiaux déjà validés par les serveurs, tant que ces transactions n'auront pas été rapportées autrement aux serveurs.

Lors d'une transaction avec une entité externe, les serveurs pourront commencer par calculer la quantité concernée en tenant compte de toutes les transactions rapportées à ladite quantité présente sur le dispositif.

Pour une modification de document représenté par un fichier ou une quantité inscrite dans un registre du dispositif électronique, si le dispositif électronique contient des transactions sur ce document qui n'ont pas encore été validées par le serveur, le double lecteur pourra suivre la procédure ci-dessous prévue pour les transactions avec une entité externe et nécessitant donc une synchronisation avec le serveur, puis autoriser et implémenter la modification dudit fichier ou de la quantité sur le dispositif électronique. Le dispositif pourra aussi restreindre les modifications de fichiers aux fichiers ne disposant que d'un registre où peut être inscrite une quantité et dont cette quantité serait contrainte à n'être que 0 ou1.

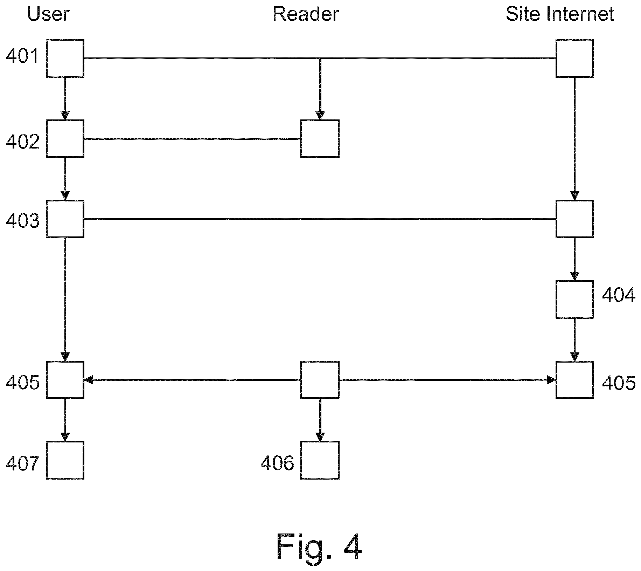

Les serveurs étant accessibles par connexion à un réseau de données, ils peuvent permettre une synchronisation de données d'au moins l'un des dispositifs électroniques avec lesdits serveurs, via un ordinateur ou un téléphone. Un exemple de processus de synchronisation est décrit plus loin en référence à la figure 4.

Le système pour la mise en œuvre de l'invention pourra comporter plusieurs clés électroniques par serveur, qui seront utilisées indifféremment si ceci est nécessaire pour que chaque serveur puisse répondre vite aux double-lecteurs et aux dispositifs électroniques.

Dans un exemple de mise en œuvre de l'invention, les dispositifs électroniques comportant des cartes à puce de type SIM et une connexion RFID, le système est agencé pour permettre des transactions impliquant deux doubles lecteurs distants l'un de l'autre. Le système pourra alors noter dans l'enregistrement de la transaction les identifiants de chacun des deux lecteurs. Un mécanisme d'appariement des deux lecteurs peut être organisé. Ce mécanisme pourra comporter un moyen d'afficher l'identité du détenteur du dispositif électronique éloigné et pourra aussi restreindre les transactions aux transactions dont au moins un des dispositifs électroniques impliqués possède un détenteur identifiable. Le mécanisme d'appariement pourra aussi avantageusement comporter un moyen pour l'un ou pour chacun des deux lecteurs appariés d'indiquer le lieu où se trouve l'autre lecteur.

### Sécurité des fichiers et quantités

Par 'sécurisé' on veut dire que l'information ne peut circuler ou être modifiée dans le système en dehors des procédures propres à celui-ci et ne peut en sortir ou y entrer sans autorisation de l'utilisateur conformément aux procédures du système qui peuvent dépendre du type de chaque document.

Les données présentes sur les dispositifs électroniques selon l'invention et les lecteurs ou serveurs sont de préférence sécurisées : Ces données inscrites en mémoire ne peuvent être interprétées qu'en présence du dispositif électronique ou du double lecteur qui les porte, par exemple par cryptage à l'aide d'une clé résidant sur ce dispositif électronique ou double lecteur.

Des mécanismes de protection des logiciels portés par les dispositifs électroniques et doubles lecteurs sont de préférence présents, de façon à éviter que des logiciels frauduleux y soient introduits. Ces logiciels peuvent être signés et leur signature vérifiée lors de leur chargement. Ces signatures peuvent aussi être vérifiées avant toute transaction. Les logiciels peuvent également être différents sur chaque élément du système, par exemple en ajoutant à son code une référence à l'identifiant de l'élément du système sur lequel il est destiné à fonctionner, de sorte que le piratage ou la modification des logiciels ne compromette pas la plupart ou la totalité des éléments du système, mais uniquement ceux sur lesquels ils sont censés fonctionner. Par piratage ou modification du logiciel, on entend la possibilité de remplacer un tel logiciel par un autre, sans que l'élément du système sur lequel il est censé fonctionner soit capable de remarquer un tel remplacement. Par exemple, les techniques utilisées pour sécuriser les fichiers utilisent des méthodes connues sous le nom de «hachage». Certaines de ces méthodes, telles que MD5, ont été rapportées comme n'étant pas parfaitement sécurisées.

De préférence, toutes les communications entre les différents éléments du système se font de telle sorte qu'elles ne soient compréhensibles que par les éléments du système et ne puissent provenir d'éléments tiers en dehors des systèmes accrédités à cet effet et liés aux serveurs, ou commandant le double lecteur en lieu et place d'un utilisateur.

Chaque élément du système, i.e. chaque serveur, double lecteur ou dispositif électronique, pourra posséder une clé privée qu'il est le seul à connaître mais dont la clé publique est associée à son identifiant.

Avantageusement, aucune de ces clés privées, que ce soit des serveurs, de chaque double lecteur ou de chaque dispositif électronique, ne sort jamais de son support, et se trouve avantageusement protégée physiquement par une technologie électronique appropriée.

Un mécanisme peut être prévu pour permettre le renouvellement des clés des serveurs et de chaque double lecteur.

### Détection des fraudes

Le double lecteur comportant une horloge, les informations inscrites dans les premier et deuxième dispositifs pourront être horodatées du moment de l'échange.

Le serveur annule des transactions enregistrées sur les dispositifs électroniques si le chainage des transactions à une quelconque transaction fait apparaître que toute règle associée à la transaction et paramétrée dans le ou les serveurs n'a pas été respectée.

De préférence, les transactions ne sont effacées des doubles lecteurs qu'après que celles-ci aient été rapportées aux serveurs. Les doubles lecteurs possèderont avantageusement un voyant ou autre indicateur montrant leur incapacité de fonctionner pour de nouvelles transactions si toute leur mémoire est utilisée.

Toute anomalie, par exemple de chainage, de signature ou de date, est de préférence marquée comme frauduleuse.

Tout solde, toute transaction, toute liste détectée comme frauduleuse, par exemple portant une signature frauduleuse, est rapporté aux serveurs et marqué comme invalide.

### Traitement de la fraude

Les serveurs peuvent être agencés pour détecter une fraude et marquer toute transaction, liste, solde ou dispositif électronique comme frauduleux.

Leur invalidation et rectification éventuelle est transmise au dispositif électronique.

Un dispositif électronique ou lecteur peut être marqué comme frauduleux, rendu inopérable, rayé de la liste des dispositifs électroniques ou doubles lecteurs autorisés, et marqué comme tel. Une liste des dispositifs électroniques frauduleux pourra être communiquée aux doubles lecteurs pour que ceux-ci rendent inactifs les dispositifs électroniques frauduleux qui s'y connecteraient.

Les transactions effectuées à l'aide de lecteurs frauduleux connus et non encore validés peuvent ne pas être validées par le serveur jusqu'à ce qu'une durée raisonnable définie sur le serveur se soit écoulée depuis le moment où elles ont été effectuées; de telles transactions peuvent également être considérées comme suspectes sur les dispositifs et être empêchées d'être sujettes à d'autres transactions jusqu'à ce que le délai raisonnable se soit écoulé ou jusqu'à ce que ces transactions aient été effectivement validées par le serveur.

### Intégrité des données

Certaines opérations d'inscription de quantités et de transactions ou autres doivent être cohérentes entre elles. La conversion de transactions en modification de quantité ou de fichier ne pourra être faite sans que les deux éléments que sont les transactions et la quantité ou le fichier ne soient mis à jour ou effacés ensemble. Un processus peut être utilisé pour veiller à ce que des blocs de mise à jour du dispositif électronique ne soient validés que lorsque ces blocs d'informations auront été correctement inscrits en entier. On pourra par exemple assigner aux informations de ces blocs d'écriture une référence, cette référence n'étant marquée comme valable que lorsque tous les éléments du bloc ont été écrits correctement. Pour les effacements d'informations devenues inutiles, on pourra de la même façon inscrire des instructions d'effacement référencées, une procédure venant par la suite véritablement effacer ces écritures.

### Sécurité des communications

Diverses techniques peuvent assurer la sécurité des communications entre les divers serveurs, dispositifs électroniques et doubles lecteurs. La description qui suit ne se veut pas exhaustive mais seulement illustrative de techniques permettant une telle sécurité.

### Sécurité par listes

Chaque élément du système, c'est-à-dire chaque serveur, chaque double lecteur, chaque dispositif électronique, peut posséder une clé privée qui n'est dupliquée nulle part mais dont la clé publique correspondante est connue du système et rassemblée dans une liste. Cette clé peut être la même ou différente de la clé privée associée quoi qu'il en soit à tout élément du système (serveurs, dispositifs électroniques et double lecteurs) et servant à la mise à jour de son logiciel, à sa propre mise à jour et au cryptage des données au sein de sa mémoire.

Ces listes sont donc des listes de clés publiques associées à chaque élément. Ainsi, il y a une liste des clés publiques des serveurs, une liste des clés publiques des lecteurs, et une liste des clés publiques des dispositifs électroniques.

Les serveurs conservent chacune de ces listes, les double-lecteurs aussi ; les dispositifs électroniques ont tous la liste des clés publiques des serveurs et des clés publiques des double-lecteurs.

Les listes sont mises à jour dès que les éléments du système sont connectés suffisamment longtemps (double lecteur avec serveurs, dispositif électronique avec lecteur, ou dispositif électronique avec serveurs).

Tout envoi de données ne se fait que vers un élément répertorié sur l'une de ces listes, et crypté pour que seul l'élément destinataire puisse le lire, et signé pour que le destinataire puisse vérifier l'authenticité de l'émetteur du message.

Le système peut permettre, à la demande du serveur, le renouvellement de clés privées et de leurs clés publiques associées.

Avec ce système, on peut s'assurer que chaque dispositif électronique ne communique qu'avec un lecteur ou un serveur du même système. De même, on peut s'assurer que chaque lecteur ne communique qu'avec un serveur ou un dispositif électronique du système, et ceci de façon cryptée.

La sécurité par listes a l'inconvénient de demander une sauvegarde et une mise à jour des listes importante sur chaque dispositif électronique et lecteur, mais a l'avantage d'une part de permettre de se prémunir contre le vol des clés privées, celles-ci étant situées physiquement sur chaque support matériel et n'étant pas conçues pour en sortir, ce qui implique la sécurisation d'un moins grand nombre de technologies, et d'autre part d'assurer leur multiplicité, le vol d'une clé affectant un lecteur ou un dispositif électronique ne compromettant que ceux-ci.

### Sécurité par clés partagées

Les listes de clés des dispositifs électroniques, ou liste des clés des doubles lecteurs ou liste des clés des serveurs, peuvent être chacune remplacées par de petites listes de clés partagées de double-lecteurs, de dispositifs électroniques ou de serveurs. Ces clés sont dites partagées dans la mesure où, même si elles sont secrètes et ne doivent pas sortir du système, elles se retrouvent sur plusieurs éléments du système. Ce remplacement peut être partiel, par exemple seulement affecter la liste des dispositifs électroniques, ou la liste des lecteurs, ou bien la liste des dispositifs électroniques et la liste des lecteurs, ou bien une liste de certains lecteurs et dispositifs électroniques et serveurs. Dans ces cas, la liste des dispositifs électroniques, par exemple, n'existe plus mais est remplacée par une clé partagée de dispositifs électroniques ; les éléments du système devront alors utiliser cette clé partagée pour communiquer, ce qui évitera de communiquer avec un élément étranger au système. Ces clés pourront être asymétriques : système clé privée/clé publiques, la clé privée des éléments d'une liste se retrouvant sur chacun des éléments inscrits sur la liste et la clé publique sur chacun des éléments du système pouvant entrer en communication avec les éléments de ladite liste, ou symétriques, cette même clé se retrouvant à la fois sur les éléments inscrits sur ladite liste et sur les éléments du système pouvant communiquer avec les éléments inscrits sur ladite liste. Ces clés pourront être mises à jour régulièrement pour éviter à deux éléments mis à jour récemment de communiquer avec des clés qui auraient pu avoir été volées. Cette mise à jour sera faite par le serveur qui, connaissant la clé publique de chaque dispositif électronique et de chaque double lecteur, lui transmettra confidentiellement les nouvelles clés partagées. Que ce soit en utilisant la sécurité par listes ou par clés partagées deux éléments du système peuvent ainsi être autorisés à communiquer l'un avec l'autre s'ils possèdent chacun la clé publique correspondant à une clé privée se trouvant sur l'autre élément, cette clé privée étant soit unique et seulement disposée sur l'élément soit partagée par divers éléments du système et se trouvant alors sur plusieurs éléments du système. Des éléments du système pourront aussi communiquer entre eux s'ils connaissent chacun une même clé secrète partagée entre eux ou entre eux et d'autres éléments du système.

Dans un exemple de mise en œuvre, les dispositifs électroniques et lecteurs ne contiennent plus de listes de clés publiques de dispositifs électroniques et de doubles lecteurs mais seulement une clé partagée par les doubles lecteurs et une autre clé partagée par les dispositifs électroniques. Chaque dispositif électronique et chaque double lecteur possède aussi une clé privée mais seuls les serveurs ont la liste de leurs clés publiques associées. Les serveurs pourront alors changer et mettre à jour lesdites clés partagées.

Dans un autre exemple de mise en œuvre, la présence de clés partagées de doubles lecteurs permet d'éviter la nécessité de listes de clés publiques des lecteurs sur chaque dispositif électronique.

Dans un autre exemple de mise en œuvre, la présence de clés partagées de dispositifs électroniques permet d'éviter la nécessite de listes de clés publiques des dispositifs électroniques sur chaque double lecteur.

### Sécurité des périphériques

Les périphériques tels que claviers, lecteurs biométriques, capteurs ou autres, attachés et utilisés par les lecteurs sont de préférence sécurisés de manière à ce que les informations fournies au périphérique soient fiables ou que les informations fournies par le lecteur au périphérique puissent rester sécurisées. Les périphériques peuvent donc, de préférence, être enregistrés collectivement ou individuellement auprès du serveur qui permettra au lecteur de s'assurer que ce dispositif connecté est digne de confiance. La procédure d'accréditation peut inclure la vérification que le périphérique contient une clé privée, la clé publique associée étant connue du serveur et permettant la création d'une clé partagée à utiliser pour une communication ultérieure entre le lecteur et le périphérique.

### Sécurités supplémentaires

D'autres mesures de sécurité peuvent être introduites, parmi lesquelles :
- l'association du dispositif électronique à un utilisateur, renseignée dans le dispositif électronique ou dans les serveurs,
- la nécessité pour le détenteur du ou des dispositifs électroniques de s'identifient pour valider une transaction, par exemple en entrant un code NIP ou en utilisant un dispositif biométrique avant l'accolement du dispositif électronique au double lecteur. Ces moyens d'identification peuvent être situés indifféremment sur le double lecteur ou sur les dispositifs électroniques, ou même accessibles au double lecteur à travers l'appareil auquel il peut être connecté. Le double lecteur ou les dispositifs électroniques peuvent donc comporter des moyens d'identification de l'utilisateur, ces moyens pouvant être biométriques,
- l'adjonction au dispositif électronique de boutons permettant de valider les transactions, ou entrer un NIP,
- l'adjonction aux dispositifs électroniques d'écrans permettant d'afficher des messages, des fichiers ou des quantités,
- l'ajout d'attributs aux fichiers tels que des dates de validité.

L'invention a encore pour objet un système pour la mise en œuvre du procédé selon la revendication 11.

### Description détaillée des figures

L'invention pourra être mieux comprise à la lecture de la description détaillée qui va suivre, d'exemples de mise en œuvre non limitatifs de celle-ci, et à l'examen du dessin annexé, sur lequel :
- La figure 1 représente, de façon schématique, un exemple de système pour la mise en œuvre de l'invention,
- la figure 2 est un schéma en blocs illustrant différentes étapes d'un exemple de procédé d'échange de données selon l'invention,
- la figure 3 est une vue analogue à la figure 2 d'une variante de mise en œuvre de l'invention,
- la figure 4 est un exemple de chronologie de flux de données entre un dispositif électronique, selon l'invention, et un logiciel tiers connecté au serveur,
- la figure 5 illustre différentes étapes pouvant être mises en œuvre pour synchroniser des données entre un dispositif électronique selon l'invention et un serveur,
- la figure 6 représente différentes étapes pouvant être mises en œuvre pour mettre à jour les listes et clés d'un dispositif électronique ou d'un lecteur,
- la figure 7 représente différentes étapes pouvant être mises en œuvre pour mettre à jour le logiciel d'un dispositif électronique ou d'un lecteur,
- la figure 8 représente différentes étapes pouvant être mises en œuvre pour effectuer la synchronisation des lecteurs avec les serveurs, et
- la figure 9 représente les différentes étapes pouvant être mises en œuvre par un utilisateur pour créer ou modifier un fichier sur un périphérique sécurisé.

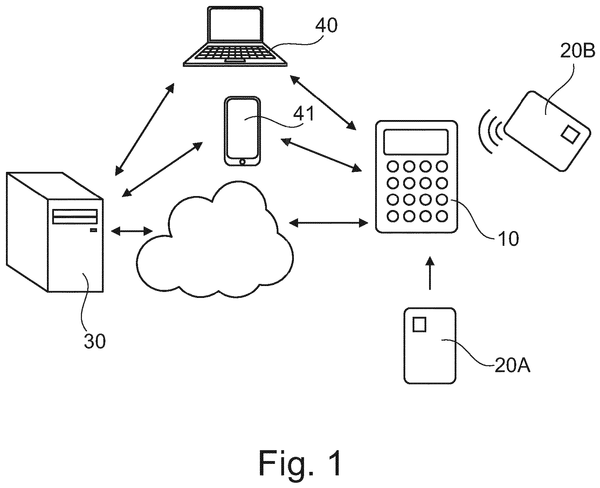

On a illustré à la figure 1 un exemple de système permettant de mettre en œuvre un procédé selon l'invention.

Ce système comporte un double lecteur 10 selon l'invention, agencé pour échanger des informations avec deux dispositifs électroniques 20A et 20B selon l'invention, au format cartes de crédit dans l'exemple illustré.

Le double lecteur 10 et les dispositifs électroniques 20A et 20B peuvent échanger des informations avec au moins un serveur distant 30, via par exemple une liaison internet ou radio, et par l'intermédiaire le cas échéant d'un dispositif annexe tel qu'un microordinateur 40 ou un téléphone portable 41.

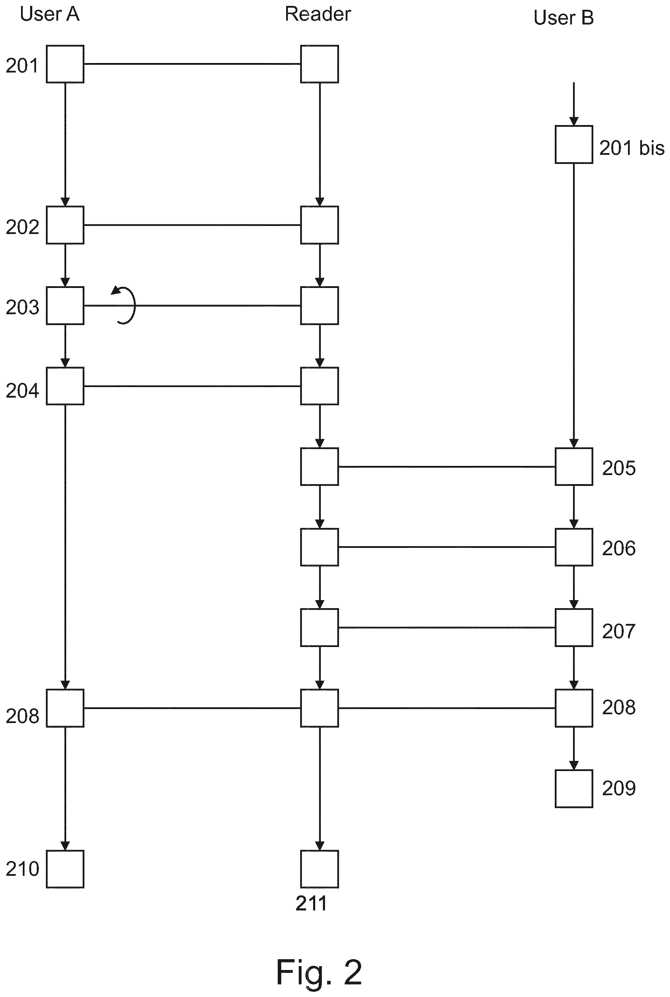

On va maintenant décrire, en se référant à la figure 2, des étapes d'un exemple de procédé selon l'invention, pour effectuer une transaction entre deux dispositifs électroniques 20A et 20B. Cette transaction est dite synchrone dans cet exemple, car les dispositifs électroniques 20A et 20B doivent être connectés simultanément au double lecteur 10 pour que la transaction puisse avoir lieu ; la première connexion sécurisée et la deuxième connexion sécurisée se superposant temporellement ; la première connexion peut être par contact et la deuxième peut être sans contact.

La transaction a ainsi lieu entre un premier utilisateur A, disposant du premier dispositif électronique 20A selon l'invention, et un deuxième utilisateur B disposant du deuxième dispositif électronique 20B selon l'invention.

L'utilisateur A commence, à une étape 201, par insérer son dispositif électronique 20A dans le double lecteur. L'utilisateur B peut éventuellement accoler son dispositif électronique au lecteur à l'étape 201bis, pour renseigner le lecteur sur la nature des fichiers et quantités qui s'y trouvent.

A une étape 202, l'utilisateur A sélectionne l'opération qu'il souhaite effectuer, par exemple : Faire une transaction/ Solde ou Solde-Solde ; ce dernier choix correspond à l'affichage du solde des deux dispositifs 20A et 20B.

Ensuite, à l'étape 203, il sélectionne le sens (envoyer ou recevoir), le fichier ou le montant de la transaction ; et renseigne le cas échéant la quantité, c'est-à-dire le montant dans le cas d'une transaction financière.

L'étape 203 peut être répétée si plusieurs transactions sont liées, c'est-à-dire que l'échange doit être constitué de plusieurs fichiers ou quantités envoyés ou reçus simultanément.

A l'étape 204, il saisit éventuellement son code NIP (Numéro d'Identification Personnel) pour valider l'opération.

A l'étape 204, certaines transactions supplémentaires peuvent également être générées automatiquement, si les transactions sélectionnées initialement le nécessitent; par exemple, les documents transférés peuvent être associés à un prix et peuvent nécessiter qu'un paiement correspondant à leur valeur soit généré lors de leur transfert, ou inversement, le paiement d'un montant peut être défini sur le dispositif destinataire pour générer un reçu; ces transactions générées automatiquement sont montrées à l'utilisateur; il entre éventuellement son code PIN (numéro d'identification personnel) afin de confirmer l'opération, ou simplement valider les transactions générées automatiquement le cas échéant.

L'utilisateur B peut lire à l'étape 205, sur l'écran du double lecteur 10, une information lui proposant la transaction ou de connaître son solde.

Il peut saisir un code NIP si l'opération le demande, à l'étape 206 et apposer ensuite à l'étape 207 son dispositif électronique 20B sur le double lecteur 10 pour effectuer la transaction. Si certaines transactions sont signalées sur le dispositif B pour exiger que certaines transactions générées automatiquement soient effectuées et qui ne figurent pas encore dans la liste des transactions à valider, ces transactions automatiques sont générées et le processus reprend à l'étape 204.

A une étape 208, le lecteur affiche que la transaction est terminée.

L'utilisateur B peut alors retirer sa carte à l'étape 209, et l'utilisateur A peut faire de même à l'étape 210.

A l'étape 211, le lecteur envoie les informations relatives à l'échange aux serveurs.

Dans le cas de transactions groupées, un même code peut être attribué à chacune des transactions. Les transactions sont inscrites d'abord sur le premier dispositif électronique mais identifiées comme 'conditionnelles' et associées au code. La conditionnalité permet au système de prendre en compte les débits écrits sur le dispositif électronique mais pas les crédits, qui ne seront pris en compte que quand la conditionnalité aura été levée. Puis les transactions sont inscrites sur le second dispositif, conditionnellement aussi, et associées au même code ; mais dans ce cas aucune des transactions ne sera prise en compte tant que la conditionnalité ne sera pas levée. Celle-ci pourra être levée en fin d'écriture par l'écriture sur le second dispositif, dans un temps raisonnable paramétré dans le système, d'une nouvelle ligne dite de levée de conditionnalité. Cette dernière ligne, une fois transmise au lecteur, sera transmise au premier dispositif et cette simple ligne, inscrite sur le premier dispositif électronique lèvera la conditionnalité des transactions associées au même code sur ce dispositif. L'instruction sera par la suite communiquée aux serveurs. Si la levée de conditionnalité n'est pas inscrite dans le temps raisonnable sur le second dispositif électronique, le lecteur créera lors de cette lecture de la seconde carte, ou lors d'une relecture de la première carte, ou plus tard, une écriture d'annulation de la transaction groupée. Cette écriture sera communiquée au premier dispositif si celui-ci ne l'a pas déjà reçue, ou au second dispositif si celui-là ne l'a pas déjà reçue, et aux serveurs. Toutes les transactions associées à ce code, créditrices ou débitrices, seront alors annulées. Les serveurs pourront se charger par la suite de préparer les instructions d'effacement de ces transactions écrites sur les deux dispositifs électroniques.

Le transfert d'un fichier ou d'une quantité présents dans le système peut aussi être contraint par d' autres règles attachées auxdits fichiers et quantités telles que par exemple rendre leur transfert conditionnel au transfert d'une copie de carte d'identité, elle-même éventuellement conditionnelle à une identification biométrique du détenteur du dispositif électronique. La contrainte de transfert peut aussi, par exemple, pour une facture émise par un commerçant, être le transfert réciproque d'argent correspondant au montant de la facture ou bien le transfert de crédits d'émission carbone demandé par une réglementation lors de l'achat d'un objet.

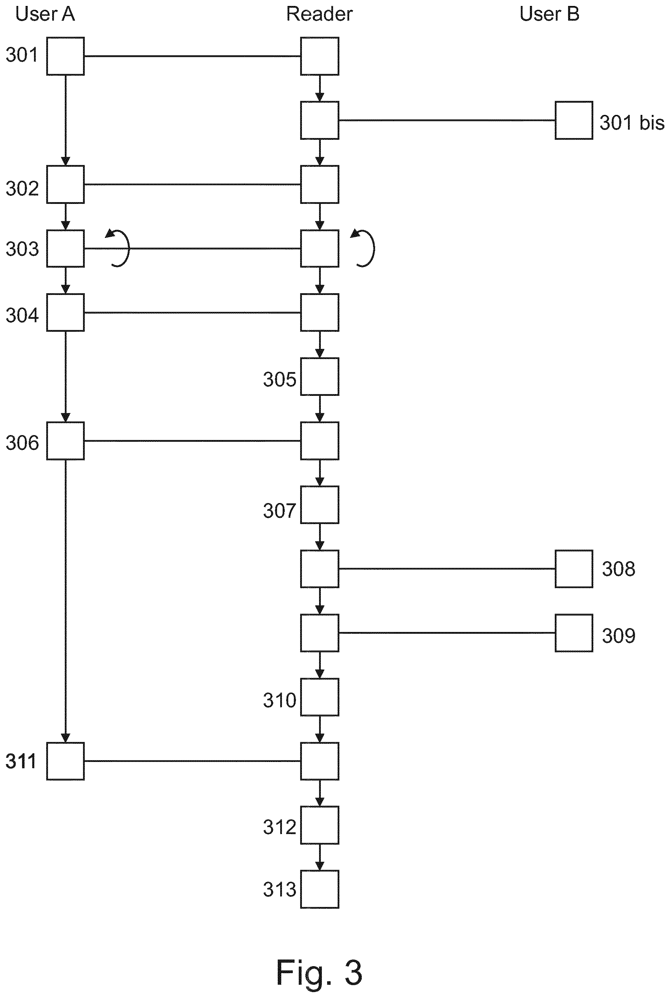

On va maintenant décrire en se référant à la figure 3 une variante de mise en œuvre de l'invention, dans le cas d'une transaction asynchrone.

L'utilisateur A commence, à une étape 301, par approcher son dispositif électronique 20A du double lecteur 10 ; l'utilisateur B fait de même à l'étape 301bis. Ces opérations servent à transmettre au lecteur la liste des fichiers et quantités contenus dans chaque dispositif électronique qui lui est accolé ; elles peuvent être omises si le lecteur, selon sa configuration, peut se passer de connaître les fichiers et quantités transférable sur les dispositifs électroniques.

A une étape 302 l'utilisateur A sélectionne l'opération qu'il souhaite effectuer, par exemple : Faire une transaction/ Solde ou Solde-Solde, ce dernier choix correspondant à l'affichage des quantités disponibles sur les deux dispositifs 20A et 20B.

Ensuite, à l'étape 303, il sélectionne le sens (envoyer ou recevoir), le fichier ou le montant de la transaction.

L'étape 303 peut être répétée si plusieurs transactions sont liées,
A une étape 304, l'utilisateur A peut saisir son code NIP pour valider l'opération.

Les transactions sont alors préparées par le double lecteur 10 avec une contrepartie 'inconnue'.

A l'étape 305 le double lecteur affiche la transaction proposée et invite l'utilisateur A à approcher sa carte.

A l'étape 306 l'utilisateur A approche son dispositif, par exemple sous forme de carte. Toutes les transactions débitrices sont vérifiées pour que chaque quantité disponible devant être débitée sur ce dispositif électronique y soit au moins égale au montant à débiter. Le lecteur fait une copie des transactions antérieures liant les fichiers et quantités à débiter de ce dispositif électronique à des fichiers et quantités ayant déjà été inscrites sur un dispositif électronique par les serveurs. Si une ou plusieurs quantités disponibles ne sont pas suffisantes, l'opération est annulée; dans le cas contraire, à l'étape 307, l'utilisateur B est éventuellement invité à entrer son code NIP, et à approcher son dispositif.

A l'étape 308 l'utilisateur B entre son code NIP.

A l'étape 309 l'utilisateur B approche son dispositif 20B, par exemple sous forme de carte. Toutes les transactions débitrices sont vérifiées pour que chaque quantité disponible devant être débitée sur ce dispositif y soit au moins égale au montant à débiter. Si une ou plusieurs quantités disponibles ne sont pas suffisantes une écriture d'annulation de la transaction est générée et est inscrite sur ce dispositif. Dans le cas contraire les transactions y sont inscrites. Les transactions antérieures, collectées à l'étape 306 sur le dispositif 20A sont copiées sur le dispositif électronique 20B. Ainsi, l'information relative à l'échange comporte des informations relatives à des échanges antérieurs concernant un même registre ou un même fichier. Le lecteur fait une copie des transactions antérieures liant les fichiers et quantités à débiter de ce dispositif électronique 20B à des fichiers et quantités ayant déjà été inscrites sur un dispositif électronique par les serveurs. Les inscriptions et copies sont sanctionnées par l'écriture d'une instruction de validation de la transaction, qui rend ces transactions valides sur le dispositif 20B.

A l'étape 310, l'utilisateur B est invité à retirer son dispositif et l'utilisateur A est invité à approcher son dispositif.

A l'étape 311 l'utilisateur A approche son dispositif. L'instruction de validation ou d'invalidation est transmise au dispositif électronique 20A. Les transactions écrites sur ce dispositif 20A sont par la même occasion mises à jour avec l'identité enfin connue du dispositif 20B. Les transactions antérieures, collectées à l'étape 309, sont copiées sur le dispositif électronique 20A. Si cette étape 311 est omise, ces opérations seront effectuées ultérieurement lors d'une autre synchronisation avec les serveurs, après que ceux-ci aient reçu l'instruction de validation qui leur aura été communiquée par le même lecteur, ou par un autre lecteur avec lequel le dispositif 20B aura communiqué ultérieurement.

A l'étape 312, le lecteur affiche que la transaction est terminée et invite l'utilisateur A à retirer son dispositif.

A l'étape 313 les transactions et instructions de validation générées au cours de cet échange sont transmises aux serveurs ainsi que les transactions recopiées des dispositifs 20A et 20B aux étapes 306 et 309.

On a illustré à la figure 4 un exemple d'échange de données entre un utilisateur, le dispositif électronique associé, et un site internet externe commandant l'insertion (crédit) ou l'enlèvement (débit) d'un fichier ou la variation d'une quantité du système affectée à un dispositif électronique.

Le dispositif électronique 20A ou 20B est par exemple au format carte de crédit. Il peut communiquer avec un serveur par l'intermédiaire d'un double lecteur 10 ou d'un ordinateur ou téléphone. L'utilisateur peut communiquer avec un site internet qui lui-même communique avec le serveur 30.

A l'étape 401, l'utilisateur ouvre une cession avec le site tiers.

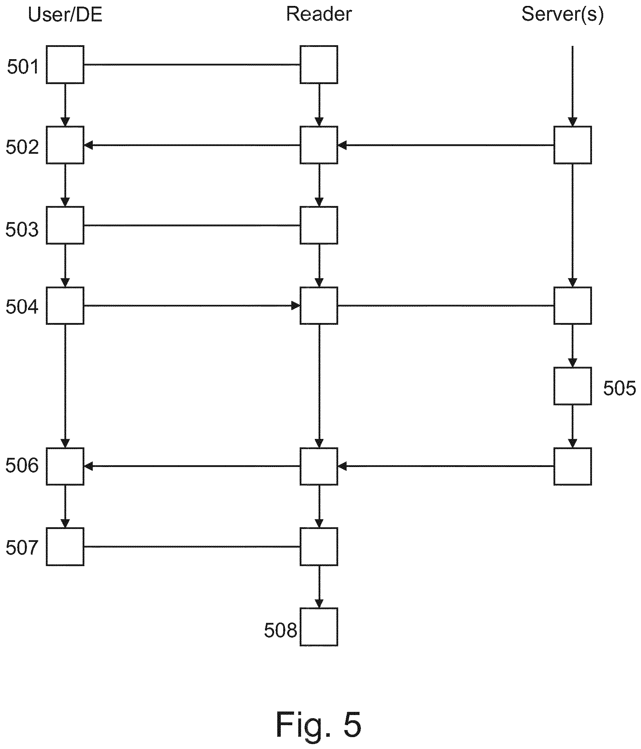

A l'étape 402, l'utilisateur accole éventuellement le dispositif électronique 20A au lecteur. Celui-ci étant connecté au serveur synchronise le dispositif 20A et le serveur 30. Les quantités sont mises à jour en fonction des dernières transactions, comme illustré à la figure 5. Cette étape n'est pas nécessaire si le transfert n'implique pas le transfert de fichier ou de quantité depuis le dispositif vers le site tiers.

A l'étape 403 l'utilisateur choisit les fichiers ou quantités et sens de la transaction sur le site tiers, à transférer vers ou depuis celui-ci. Les instructions de mise à jour des soldes du dispositif électronique sont préparées.

A l'étape 404 le site tiers vérifie qu'il peut faire la transaction. Il peut par exemple débiter provisoirement le compte en banque de l'utilisateur puis envoyer au serveur les éventuels fichiers et enfin afficher la transaction et proposer à l'utilisateur de la valider en approchant son dispositif électronique 20A du lecteur, ou en cliquant sur une icône si le dispositif électronique 20A est déjà en train de communiquer avec le serveur.

A l'étape 405 l'utilisateur approche son dispositif électronique 20A du lecteur 10 ou appuie sur l'icône. Les instructions de mise à jour des quantités sont alors écrites sur le dispositif 20A. Les fichiers éventuellement transmis depuis le site tiers à l'étape 404 sont copiés sur le dispositif 20A et éventuellement sur les serveurs du système. Si cette étape n'a pas lieu dans un temps raisonnable la transaction est annulée et le site tiers en est informé et les éventuels fichiers transmis à l'étape 404 effacés des serveurs et du dispositif 20A. Dans le cas contraire, le site tiers est informé du succès de l'opération. Les fichiers transmis depuis le dispositif 20A à destination du site tiers sont effectivement transmis depuis le serveur au site tiers et sont éventuellement effacés des serveurs ; une instruction d'effacement desdits fichiers du dispositif 20A est alors générée.

A l'étape 406 le lecteur affiche que la transaction est terminée et invite l'utilisateur à retirer son dispositif 20A.

A l'étape 407 l'utilisateur retire son dispositif 20A.

La figure 5 illustre des exemples d'échanges de synchronisation pouvant avoir lieu entre un dispositif électronique, par exemple au format carte de crédit, et un serveur. Cet échange a lieu lorsque le dispositif électronique communique avec le lecteur et le lecteur avec le serveur. Elle ne nécessite donc que l'insertion de la carte 20A dans le lecteur ou son accolement au lecteur pendant le temps nécessaire. Les étapes ci-dessous décrivent les échanges entre le dispositif électronique 20A et le serveur 30, à travers le lecteur 10.

A l'étape 501, l'utilisateur approche son dispositif électronique 20A du lecteur.

A l'étape 502, le serveur 30 envoie éventuellement au dispositif 20A les instructions d'effacement de transaction qu'il avait déjà préparées.

A l'étape 503, toutes les instructions d'effacement de transactions présentes sur le dispositif électronique 20A sont mises en œuvre.

A l'étape 504, toutes les instructions, transactions et fichiers présents sur le dispositif 20A mais non présentes sur les serveurs sont copiées sur les serveurs à travers le serveur 30.

A l'étape 505, le serveur calcule ou fait calculer par l'un des serveurs du système les nouvelles quantités et prépare les listes de transactions à copier sur le, ou effacer du, dispositif 20A.

A l'étape 506, toutes les instructions d'effacement, transactions et nouvelles Quantités présentes sur les serveurs 30 mais non présents sur le dispositif électronique 20A mais qui devraient l'être, ou calculées à l'étape 505, sont copiées sur le dispositif électronique 20A.

A l'étape 507, toutes les instructions d'effacement de transactions présentes sur le dispositif électronique 20A sont mises en œuvre.

A l'étape 508, l'utilisateur est invité à retirer son dispositif électronique.

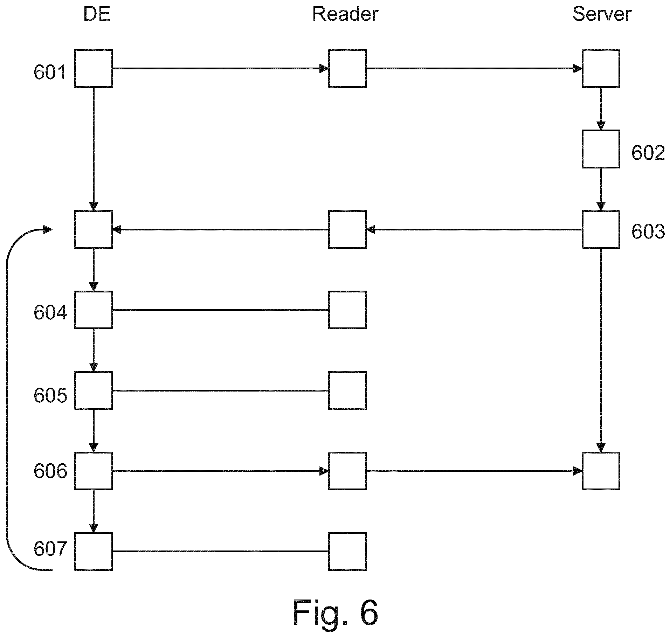

Sur la figure 6, on a représenté un exemple d'organisation de la mise à jour des clés et des listes de clés présentes sur les lecteurs ou les dispositifs électroniques.

Cette figure suppose la présence du dispositif électronique (DE) et d'un lecteur, mais les étapes qui suivent s'appliquent aussi à la synchronisation du lecteur seul.

A l'étape 601, le dispositif électronique, ou le lecteur, envoie au serveur son identité.

Le serveur prépare crypte et signe :
a. la mise à jour des clés,
b. les mises à jour des listes de clés,
pour que seul le dispositif électronique, ou le lecteur, puisse les lire. Il signe les fichiers cryptés avec une de ses clés dont il sait que la clé publique est présente sur le dispositif électronique, ou le lecteur. Ces fichiers de mise à jour contiennent des informations sur les éléments à effacer, à remplacer et à ajouter. Ils peuvent être découpés en plusieurs fichiers pour permettre une mise à jour par étapes.

A l'étape 602, le fichier, crypté et signé, est envoyé vers le dispositif électronique, ou le lecteur.

A l'étape 603, le dispositif électronique, ou le lecteur, vérifie la signature du fichier et le décryptent.

A l'étape 604, le dispositif électronique, ou le lecteur, installe les clés et listes de clés dans sa mémoire interne prévue à cet effet, puis déclenche la prise en compte de cette mise à jour.

A l'étape 605, le dispositif, ou le lecteur, informe le serveur de la prise en compte du fichier de mise à jour.

A l'étape 606, le dispositif électronique, ou le lecteur, efface de sa mémoire les informations rendues caduques.

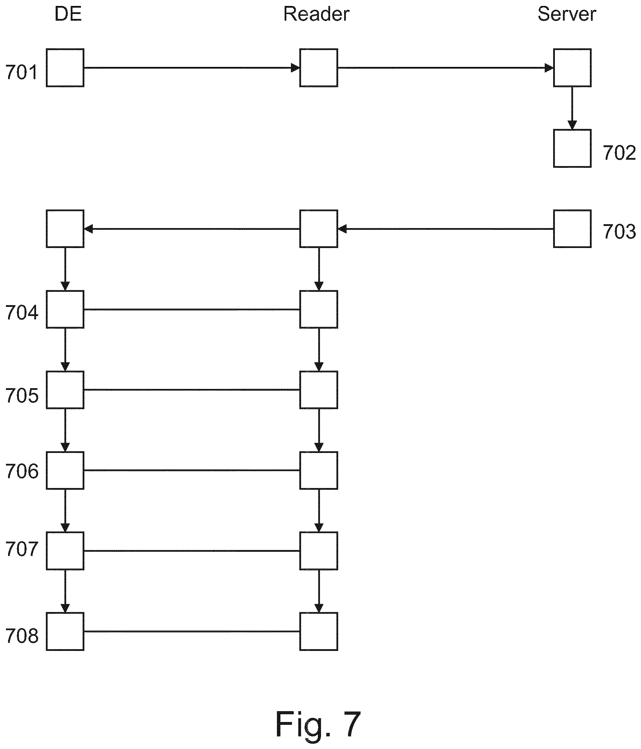

Sur la figure 7, on a représenté un exemple d'organisation de la mise à jour du logiciel du lecteur ou du dispositif électronique.

Cette figure suppose la présence du dispositif électronique (DE) et d'un lecteur, mais les étapes qui suivent s'appliquent aussi à la synchronisation du lecteur seul.

A l'étape 701, le dispositif électronique, ou le lecteur, envoie au serveur son identité.

A l'étape 702, le serveur crypte le logiciel à installer pour que seul le dispositif électronique, ou le lecteur, puisse le lire. Il signe aussi le fichier ainsi crypté avec une de ses clés dont il sait que la clé publique est présente sur le dispositif électronique, ou le lecteur.

A l'étape 703, le Fichier, crypté et signé est envoyé vers le dispositif électronique, ou le lecteur.

A l'étape 704, le dispositif électronique, ou le lecteur, vérifie la signature du fichier et le décrypte.

A l'étape 705, le dispositif électronique, ou le lecteur, installe le logiciel dans leur mémoire interne prévue à cet effet, sans encore effacer le logiciel déjà installé.

A l'étape 706, le dispositif électronique, ou le lecteur, vérifie que le nouveau logiciel a bien été copié et change l'instruction de démarrage du dispositif électronique (ou le lecteur) pour que celui-ci, quand il redémarrera, redémarre en utilisant le nouveau logiciel.

A l'étape 707, le dispositif électronique, ou le lecteur, est redémarré.

Au démarrage, à l'étape 708, l'ancien logiciel du dispositif électronique, ou du lecteur, est effacé s'il y est encore présent.

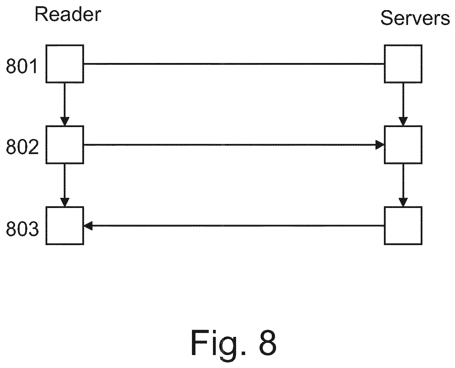

La figure 8 décrit un exemple de synchronisation des lecteurs avec les serveurs
A l'étape 801, une mise à jour des certificats et des listes est effectuée.

A l'étape 802, il y a envoi vers le serveur puis effacement des transactions effectuées avec le lecteur et stockées sur celui-ci.

A l'étape 803, il y a réception éventuelle de la liste des dispositifs électroniques à marquer comme frauduleux ou à désactiver.

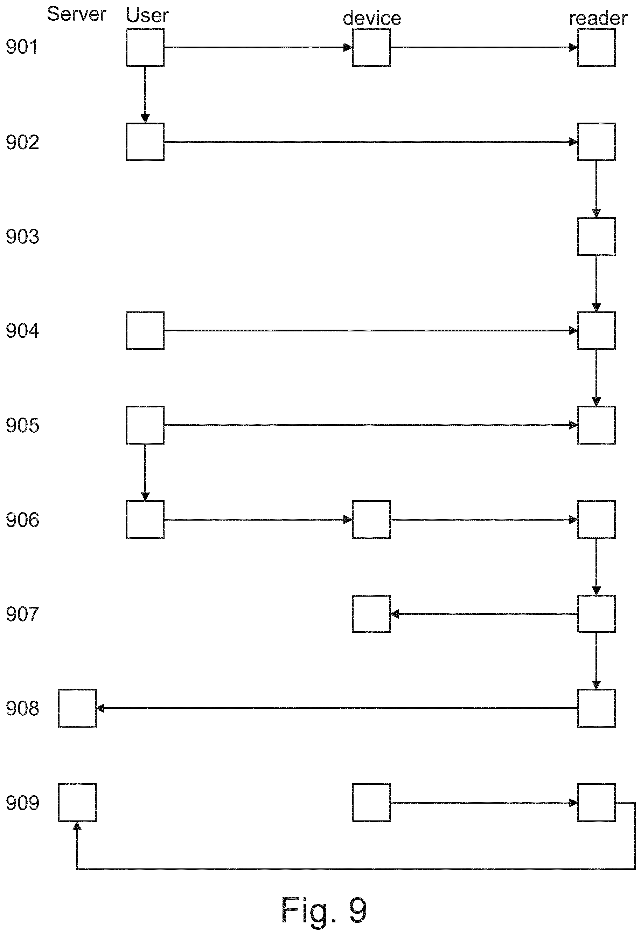

La figure 9 représente les différentes étapes pouvant être mises en œuvre par un utilisateur pour créer ou modifier un fichier sur un dispositif électronique sécurisé.

A l'étape 901, l'utilisateur approche son dispositif électronique du lecteur.

A l'étape 902, l'utilisateur sélectionne le fichier qu'il souhaite modifier ou choisit "Créer un nouveau fichier" dans le menu du lecteur.

A l'étape 903, si la quantité associée au fichier est égale à la quantité maximale autorisée à être associée au fichier, et que le fichier a été marqué comme «modifiable», le fichier est affiché sur le lecteur et les fonctions permettant son édition sont activées. Si l'utilisateur a sélectionné 'Créer nouveau fichier', un fichier vierge est affiché sur le lecteur et les fonctions permettant son édition sont activées.

A l'étape 904, l'utilisateur édite le fichier.

A l'étape 905, l'utilisateur peut modifier certaines des caractéristiques du fichier, telles que sa quantité minimale, sa quantité maximale, son incrément ou d'autres caractéristiques qui ont une influence sur les possibilités d'utilisation du fichier dans le système, telles que 'transférable' ou bien 'nécessite un dispositif biométrique pour la visualisation'. La quantité attachée au fichier est alors mise égale à la quantité maximale autorisée.

A l'étape 906, l'utilisateur rapproche le dispositif électronique du lecteur.

A l'étape 907, le fichier est copié sur le dispositif électronique.

A l'étape 908, si le lecteur est connecté au serveur ou ultérieurement, lorsque le lecteur est connecté au serveur, le fichier est copié sur le serveur.

A l'étape 909, la carte peut également placer une copie du fichier sur le serveur via une connexion au serveur avec un autre lecteur.

## Revendications

1. Procédé pour effectuer au moins un échange sécurisé au sein d'un système comportant des premier et deuxième dispositifs électroniques (20A, 20B) et un double lecteur (10) comportant des moyens de connexion à chacun des dispositifs, et au moins un serveur (30) apte à valider des transactions et auquel peuvent être communiquées des informations relatives à l'échange, ce procédé comportant les étapes consistant à :
a) entrer, dans le lecteur (10), à l'aide d'une interface homme machine du double lecteur ou d'un appareil externe qui lui est connecté, une information relative à un échange à effectuer entre les premier et deuxième dispositifs (20A, 20B),
b) inscrire dans le premier dispositif (20A), à l'aide du lecteur (10), une information relative à l'échange,
c) inscrire dans le deuxième dispositif (20B), à l'aide du lecteur (10), une information relative à l'échange, et à défaut procéder à l'annulation de l'échange,
d) transmettre les données relatives à ladite transaction audit au moins un serveur (30),
le double lecteur (10) étant agencé pour se connecter audit au moins un serveur (30), pendant qu'une transaction est effectuée entre les deux dispositifs électroniques, ou en dehors d'une telle transaction ;
la validité de l'inscription sur le premier dispositif (20A) étant conditionnelle à l'inscription sur le second dispositif (20B) de l'information relative à l'échange ; ladite validité de l'inscription sur le premier dispositif (20A) étant communiquée, après l'inscription sur le deuxième dispositif (20B), au premier dispositif (20A) par l'intermédiaire du double lecteur, ou ultérieurement, par l'intermédiaire du serveur puis d'un autre double lecteur, l'information relative à l'échange comporte des informations relatives à des échanges antérieurs concernant un même registre ou un même fichier, ledit au moins un serveur (30) annulant une transaction enregistrée sur les dispositifs électroniques (20A, 20B) si le chainage de cette transaction à une quelconque transaction fait apparaître qu'au moins une règle associée à la transaction et paramétrée dans un serveur n'a pas été respectée ;
les informations enregistrées sur chacun des premier et deuxième dispositifs électroniques (20A, 20B) comportant :
un historique des dernières transactions non encore validées par ledit au moins un serveur (30), et
une liste des transactions effectuées par le dispositif (20A, 20B) avec d'autres dispositifs électroniques non encore enregistrées sur ledit au moins un serveur (30), permettant au serveur de chainer chaque transaction sur le dispositif (20A, 20B) à une quantité ou un fichier d'un autre dispositif électronique, même si ces transactions n'ont pas par ailleurs été communiquées au serveur.

2. Procédé selon la revendication précédente, dans lequel deux éléments du système choisis parmi les dispositifs électroniques, le ou les serveurs, et les double lecteurs, sont autorisés à communiquer l'un avec l'autre s'ils possèdent chacun la clé publique correspondant à une clé privée se trouvant sur l'autre élément, cette clé privée étant soit unique et seulement disposée sur ledit élément soit partagée par d'autres éléments du système, ou s'ils connaissent chacun une même clé secrète partagée entre eux, ou entre eux et d'autres éléments du système.

3. Procédé selon l'une des revendications précédentes, le double lecteur (10) comportant une horloge les informations inscrites dans les premier et deuxième dispositifs étant horodatées du moment de l'échange.

4. Procédé selon l'une quelconque des revendications précédentes, dans lequel le double lecteur opère le transfert de quantités inscrites sur un registre d'un premier dispositif électronique à partir ou vers le registre d'autres dispositifs électroniques en veillant à ce qu'à l'issue de chaque transfert certaines règles présentes dans les double lecteurs au moment du transfert soient respectées pour chacune des valeurs initiales desdits registres incrémentées des quantités reçues et auxquelles ont été soustraites les quantités envoyées ; ces règles pouvant être notamment de rester supérieur ou égal à zéro et inférieur à un maximum.

5. Procédé selon l'une quelconque des revendications précédentes, la première connexion sécurisée et la deuxième connexion sécurisée se superposant temporellement.

6. Procédé selon l'une quelconque des revendications précédentes, l'étape a) étant précédée d'une étape où le premier dispositif (20A) et/ou le second dispositif (20B) communique des informations au lecteur, notamment des informations relatives à un inventaire des documents enregistrés dans les dispositifs pour que le lecteur puisse les intégrer dans un menu, et/ou la première connexion étant par contact et la deuxième étant sans contact.

7. Procédé selon l'une quelconque des revendications précédentes, l'interface homme machine du double lecteur (10) comportant un clavier permettant d'entrer ladite information relative à l'échange, et/ou l'interface homme machine du double lecteur (10) comportant un écran, le système permettant d'afficher deux messages à destination des porteurs des premier et deuxième dispositifs respectivement.

8. Procédé selon l'une quelconque des revendications précédentes, les dispositifs électroniques (20A, 20B) étant au format carte de crédit ou carte SIM, et/ou les échanges sécurisés avec les dispositifs électroniques (20A, 20B) ayant lieu dans des endroits différents à travers deux double-lecteurs liés par une connexion informatique, l'un des dispositifs électroniques ayant de préférence un propriétaire dont l'identité sera révélée au détenteur du second dispositif électronique avant que celui-ci ne fasse la transaction.

9. Procédé selon l'une quelconque des revendications précédentes, le double lecteur servant de relais pour informer ledit au moins un serveur (30) répertoriant les transactions provenant de dispositifs électroniques avec lesquels ils auront communiqué, sans forcément avoir généré lesdites transactions.

10. Procédé selon l'une quelconque des revendications précédentes, l'étape d) ayant lieu après la transaction.

11. Système pour la mise en œuvre du procédé selon l'une quelconque des revendications précédentes, comportant :
- au moins deux dispositifs électroniques (20A, 20B),
- au moins un double lecteur (10) comportant des moyens de connexion à chacun des dispositifs et de préférence une interface homme machine,
- au moins un serveur informatique (30) apte à valider des transactions et auquel peuvent être communiquées des informations relatives à l'échange,
le double lecteur étant agencé pour établir une première connexion sécurisée au premier dispositif (20A), établir une deuxième connexion sécurisée au deuxième dispositif (20B), permettre d'entrer dans le lecteur, à l'aide de son interface ou d'un appareil externe qui lui est connecté, une information relative à un échange à effectuer entre les premier et deuxième dispositifs électroniques (20A, 20B), inscrire dans le premier dispositif (20A) une information relative à l'échange, inscrire dans le deuxième dispositif (20B) une information relative à l'échange, et à défaut procéder à l'annulation de cet échange, puis communiquer les informations relatives à l'échange audit au moins un serveur (30), et
le double lecteur (10) étant agencé pour se connecter audit au moins un serveur (30), pendant qu'une transaction est effectuée entre les deux dispositifs électroniques, ou en dehors d'une telle transaction, ledit au moins un serveur (30) étant notamment accessible par connexion à un réseau de données, et permettant notamment une synchronisation de données d'au moins l'un des dispositifs électroniques (20A, 20B) via un ordinateur ou un téléphone, la validité de l'inscription sur le premier dispositif (20A) étant conditionnelle à l'inscription sur le second dispositif (20B) de l'information relative à l'échange ; ladite validité de l'inscription sur le premier dispositif (20A) étant communiquée, après l'inscription sur le deuxième dispositif (20B), au premier dispositif (20A) par l'intermédiaire du double lecteur, ou ultérieurement, par l'intermédiaire du serveur puis d'un autre double lecteur, l'information relative à l'échange comporte des informations relatives à des échanges antérieurs concernant un même registre ou un même fichier, ledit au moins un serveur (30) annulant une transaction enregistrée sur les dispositifs électroniques (20A, 20B) si le chainage de cette transaction à une quelconque transaction fait apparaître qu'au moins une règle associée à la transaction et paramétrée dans un serveur n'a pas été respectée ;
chacun des dispositifs électroniques (20A, 20B) étant agencé pour enregistrer un historique des dernières transactions non encore validées par ledit au moins un serveur (30) et une liste des transactions effectuées par le dispositif (20A, 20B) avec d'autres dispositifs électroniques non encore enregistrées sur ledit au moins un serveur (30), permettant au serveur de chainer chaque transaction sur le dispositif (20A, 20B) à une quantité ou un fichier d'un autre dispositif électronique, même si ces transactions n'ont pas par ailleurs été communiquées au serveur.

12. Système selon la revendication 11, le double lecteur étant agencé pour permettre simultanément une communication par contact avec l'un des dispositifs électroniques et sans contact avec l'autre dispositif électronique, et/ou le double lecteur (10) ou les dispositifs électroniques (20A, 20B) comportant des moyens d'identification de l'utilisateur, notamment un moyen d'identification étant biométrique.

13. Système selon l'une des deux revendications 11 et 12, le ou les serveurs enregistrant toutes les transactions liées au compte, ces transactions leur étant rapportées au moment des transactions, ou ultérieurement, ou le ou les serveurs enregistrant toutes les transactions liées au compte, mais aussi les fichiers et quantités inscrites sur les registres des dispositifs électroniques.

14. Système selon l'une quelconque des revendications 11 à 13, le double lecteur comportant une mémoire protégée physiquement, comportant la clé privée du double lecteur et dont, de préférence, l'accès physique entraîne sa propre destruction avant que l'information qui s'y trouve n'en puisse être copiée.

15. Système selon l'une des revendications 11 à 14, le double lecteur (10) comportant une interface homme machine.

## Patentansprüche

1. Verfahren zum Durchführen mindestens eines sicheren Austausches innerhalb eines Systems, das erste und zweite elektronische Vorrichtungen (20A, 20B) und ein Dual-Lesegerät (10), das Mittel zur Verbindung mit jeder der Vorrichtungen umfasst, und mindestens einen Server (30), der in der Lage ist, Transaktionen zu validieren, und an den Informationen bezüglich des Austausches übermittelt werden können, umfasst, wobei dieses Verfahren die folgenden Schritte umfasst:
a) Eingeben, mithilfe einer Mensch-Maschine-Schnittstelle des Dual-Lesegeräts oder eines mit ihm verbundenen externen Geräts, einer Information bezüglich eines zwischen der ersten und der zweiten Vorrichtung (20A, 20B) durchzuführenden Austausches in das Lesegerät (10),
b) Eintragen einer Information bezüglich des Austausches mit Hilfe des Lesegeräts (10) in die erste Vorrichtung (20A),
c) Eintragen einer Information bezüglich des Austausches mithilfe des Lesegeräts (10) in die zweite Vorrichtung (20B) und andernfalls Vornehmen der Annullierung des Austausches,
d) Übertragen der Daten bezüglich der Transaktion an den mindestens einen Server (30),
wobei das Dual-Lesegerät (10) dazu ausgebildet ist, sich mit dem mindestens einen Server (30), während eine Transaktion zwischen den beiden elektronischen Vorrichtungen durchgeführt wird, oder außerhalb einer solchen Transaktion zu verbinden;
wobei die Gültigkeit der Eintragung auf der ersten Vorrichtung (20A) durch die Eintragung der Information bezüglich des Austausches auf der zweiten Vorrichtung (20B) bedingt ist; wobei die Gültigkeit der Eintragung auf der ersten Vorrichtung (20A) nach der Eintragung auf der zweiten Vorrichtung (20B) an die erste Vorrichtung (20A) über das Dual-Lesegerät oder später über den Server und dann ein anderes Dual-Lesegerät übermittelt wird, wobei die Information bezüglich des Austausches Informationen bezüglich früherer Austausche umfasst, die ein selbes Register oder eine selbe Datei betreffen, wobei der mindestens eine Server (30) eine auf den elektronischen Vorrichtungen (20A, 20B) gespeicherte Transaktion annulliert, wenn die Verkettung dieser Transaktion mit einer beliebigen Transaktion ergibt, dass mindestens eine mit der Transaktion verknüpfte und in einem Server parametrierte Regel nicht beachtet worden ist;
wobei die auf jeder der ersten und zweiten elektronischen Vorrichtungen (20A, 20B) gespeicherten Informationen umfassen:
eine Historie der letzten Transaktionen, die von dem mindestens einen Server noch nicht validiert wurden (30), und
eine Liste der Transaktionen, die von der Vorrichtung (20A, 20B) mit anderen elektronischen Vorrichtungen durchgeführt wurden und noch nicht auf dem mindestens einen Server (30) gespeichert sind, was es dem Server ermöglicht, jede Transaktion auf der Vorrichtung (20A, 20B) mit einer Menge oder einer Datei einer anderen elektronischen Vorrichtung zu verketten, selbst wenn diese Transaktionen nicht anderweitig an den Server übermittelt worden sind.

2. Verfahren nach dem vorhergehenden Anspruch, wobei zwei Elemente des Systems, die aus den elektronischen Vorrichtungen, dem oder den Servern und den Dual-Lesegeräten ausgewählt sind, berechtigt sind, miteinander zu kommunizieren, wenn sie jeweils den öffentlichen Schlüssel besitzen, der einem privaten Schlüssel entspricht, der sich auf dem anderen Element befindet, wobei dieser private Schlüssel entweder einzigartig und nur auf dem Element angeordnet ist oder von anderen Elementen des Systems geteilt wird, oder wenn sie jeweils einen selben geheimen Schlüssel kennen, der zwischen ihnen oder zwischen ihnen und anderen Elementen des Systems geteilt wird.

3. Verfahren nach einem der vorhergehenden Ansprüche, wobei das Dual-Lesegerät (10) eine Uhr umfasst, wobei die in die ersten und zweiten Vorrichtungen eingetragenen Informationen mit dem Zeitpunkt des Austausches zeitgestempelt werden.

4. Verfahren nach einem der vorhergehenden Ansprüche, wobei das Dual-Lesegerät den Transfer von Mengen, die in ein Register einer ersten elektronischen Vorrichtung eingetragen sind, von oder zu dem Register anderer elektronischer Vorrichtungen vornimmt, wobei dafür gesorgt wird, dass nach jedem Transfer bestimmte Regeln, die zum Zeitpunkt des Transfers in den Dual-Lesegeräten vorhanden sind, für jeden der Ausgangswerte der Register, die um die empfangenen Mengen inkrementiert werden und von denen die gesendeten Mengen subtrahiert werden, beachtet werden; wobei diese Regeln insbesondere größer oder gleich null und kleiner als ein Maximum bleiben können.

5. Verfahren nach einem der vorhergehenden Ansprüche, wobei sich die erste sichere Verbindung und die zweite sichere Verbindung zeitlich überlagern.

6. Verfahren nach einem der vorhergehenden Ansprüche, wobei dem Schritt a) ein Schritt vorausgeht, in dem die erste Vorrichtung (20A) und/oder die zweite Vorrichtung (20B) Informationen an das Lesegerät übermittelt, insbesondere Informationen bezüglich eines Inventars der in den Vorrichtungen gespeicherten Dokumente, damit das Lesegerät sie in ein Menü integrieren kann, und/oder wobei die erste Verbindung kontaktbehaftet ist und wobei die zweite kontaktlos ist.

7. Verfahren nach einem der vorhergehenden Ansprüche, wobei die Mensch-Maschine-Schnittstelle des Dual-Lesegeräts (10) eine Tastatur umfasst, die es ermöglicht, die Information bezüglich des Austausches einzugeben, und/oder wobei die Mensch-Maschine-Schnittstelle des Dual-Lesegeräts (10) einen Bildschirm umfasst, wobei das System es ermöglicht, zwei Meldungen an die Inhaber der ersten beziehungsweise zweiten Vorrichtung anzuzeigen.

8. Verfahren nach einem der vorhergehenden Ansprüche, wobei die elektronischen Vorrichtungen (20A, 20B) im Kreditkarten- oder SIM-Karten-Format sind und/oder wobei die sicheren Austausche mit den elektronischen Vorrichtungen (20A, 20B) an verschiedenen Orten über zwei durch eine Computerverbindung verbundene Dual-Lesegeräte stattfinden, wobei die eine der elektronischen Vorrichtungen vorzugsweise einen Eigentümer hat, dessen Identität dem Besitzer der zweiten elektronischen Vorrichtung offenbart wird, bevor dieser die Transaktion tätigt.

9. Verfahren nach einem der vorhergehenden Ansprüche, wobei das Dual-Lesegerät als Relais dient, um den mindestens einen Server (30) zu informieren, der die Transaktionen auflistet, die von elektronischen Vorrichtungen kommen, mit denen sie kommuniziert haben, ohne die Transaktionen notwendigerweise generiert zu haben.

10. Verfahren nach einem der vorhergehenden Ansprüche, wobei der Schritt d) nach der Transaktion stattfindet.

11. System zur Durchführung des Verfahrens nach einem der vorhergehenden Ansprüche, umfassend:
- mindestens zwei elektronische Vorrichtungen (20A, 20B),
- mindestens ein Dual-Lesegerät (10), das Mittel zur Verbindung mit jeder der Vorrichtungen und vorzugsweise eine Mensch-Maschine-Schnittstelle umfasst,
- mindestens einen Computerserver (30), der in der Lage ist, Transaktionen zu validieren, und an den Informationen bezüglich des Austausches übermittelt werden können,
wobei das Dual-Lesegerät dazu ausgebildet ist, eine erste sichere Verbindung zu der ersten Vorrichtung (20A) aufzubauen, eine zweite sichere Verbindung zu der zweiten Vorrichtung (20B) aufzubauen, zu ermöglichen, in das Lesegerät mithilfe seiner Schnittstelle oder eines mit ihm verbundenen externes Geräts eine Information bezüglich eines zwischen der ersten und zweiten elektronischen Vorrichtung (20A, 20B) durchzuführenden Austausches einzugeben, in die erste Vorrichtung (20A) eine Information bezüglich des Austausches einzutragen, in die zweite Vorrichtung (20B) eine Information bezüglich des Austausches einzutragen und andernfalls die Annullierung dieses Austauschs vorzunehmen, dann die Informationen bezüglich des Austausches an den mindestens einen Server (30) zu übermitteln, und
wobei das Dual-Lesegerät (10) dazu ausgebildet ist, sich mit dem mindestens einen Server (30), während eine Transaktion zwischen den beiden elektronischen Vorrichtung durchgeführt wird, oder außerhalb einer solchen Transaktion zu verbinden, wobei der mindestens eine Server (30) insbesondere über eine Verbindung mit einem Datennetzwerk zugänglich ist und insbesondere eine Synchronisation von Daten mindestens einer der elektronischen Vorrichtungen (20A, 20B) über einen Computer oder ein Telefon ermöglicht, wobei die Gültigkeit der Eintragung auf der ersten Vorrichtung (20A) durch die Eintragung der Information bezüglich des Austausches auf der zweiten Vorrichtung (20B) bedingt ist; wobei die Gültigkeit der Eintragung auf der ersten Vorrichtung (20A) nach der Eintragung auf der zweiten Vorrichtung (20B) der ersten Vorrichtung (20A) über das Dual-Lesegerät oder später über den Server und dann ein anderes Dual-Lesegerät übermittelt wird, wobei die Information bezüglich des Austausches Informationen bezüglich früherer Austausche umfasst, die ein selbes Register oder eine selbe Datei betreffen, wobei der mindestens eine Server (30) eine auf den elektronischen Vorrichtungen (20A, 20B) gespeicherte Transaktion annulliert, wenn die Verkettung dieser Transaktion mit einer beliebigen Transaktion ergibt, dass mindestens eine mit der Transaktion verknüpfte und in einem Server parametrierte Regel nicht beachtet worden ist;
wobei jede der elektronischen Vorrichtungen (20A, 20B) dazu ausgebildet ist, eine Historie der letzten Transaktionen, die von dem mindestens einen Server (30) noch nicht validiert wurden, und eine Liste der Transaktionen, die von der Vorrichtung (20A, 20B) mit anderen elektronischen Vorrichtungen durchgeführt wurden und auf dem mindestens einen Server (30) noch nicht gespeichert sind, zu speichern, was es dem Server ermöglicht, jede Transaktion auf der Vorrichtung (20A, 20B) mit einer Menge oder einer Datei einer anderen elektronischen Vorrichtung zu verketten, selbst wenn diese Transaktionen nicht anderweitig an den Server übermittelt worden sind.

12. System nach Anspruch 11, wobei das Dual-Lesegerät dazu ausgebildet ist, gleichzeitig eine kontaktbehaftete Verbindung mit einer der elektronischen Vorrichtungen und eine kontaktlose mit der anderen elektronischen Vorrichtung zu ermöglichen, und/oder wobei das Dual-Lesegerät (10) oder die elektronischen Vorrichtungen (20A, 20B) Mittel zur Identifizierung des Benutzers umfassen, wobei insbesondere ein Mittel zur Identifizierung biometrisch ist.

13. System nach einem der beiden Ansprüche 11 und 12, wobei der oder die Server alle mit dem Konto verbundenen Transaktionen speichern, wobei ihnen diese Transaktionen zum Zeitpunkt der Transaktionen oder später gemeldet werden, oder wobei der oder die Server alle mit dem Konto verbundenen Transaktionen speichern, aber auch die Dateien und Mengen, die in die Register der elektronischen Vorrichtungen eingetragen sind.

14. System nach einem der Ansprüche 11 bis 13, wobei das Dual-Lesegerät einen physisch geschützten Speicher umfasst, der den privaten Schlüssel des Dual-Lesegeräts umfasst und bei dem der physische Zugang vorzugsweise zu seiner eigenen Zerstörung führt, bevor die sich darin befindende Information kopiert werden kann.

15. System nach einem der Ansprüche 11 bis 14, wobei das Dual-Lesegerät (10) eine Mensch-Maschine-Schnittstelle umfasst.

## Claims

1. Method for carrying out at least one secure exchange within a system comprising a first electronic device (20A) and second electronic device (20B) and a dual reader (10) comprising means for connecting to each of the devices, and at least one server (30) which is able to validate transactions and to which information relating to the exchange can be communicated, this method comprising the steps consisting in:
a) entering, into the reader (10), using a human-machine interface of the dual reader or an external apparatus which is connected to it, information relating to an exchange to be carried out between the first device (20A) and second device (20B),
b) inscribing, in the first device (20A) using the reader (10), information relating to the exchange,
c) inscribing, in the second device (20B), using the reader (10), information relating to the exchange and, failing that, proceeding to cancel the exchange,
d) transmitting the data relating to said transaction to said at least one server (30),
the dual reader (10) being arranged to connect to said at least one server (30), while a transaction is carried out between the two electronic devices, or outside such a transaction;
the validity of the inscription on the first device (20A) being conditional on the inscription on the second device (20B) of the information relating to the exchange; said validity of the inscription on the first device (20A) being communicated, after the inscription on the second device (20B), to the first device (20A) via the dual reader, or subsequently, via the server and then another dual reader, the information relating to the exchange comprising information relating to previous exchanges concerning the same register or the same file, said at least one server (30) cancelling a transaction recorded on the electronic devices (20A, 20B) if the chaining of this transaction to any transaction reveals that at least one rule associated with the transaction and parameterized in a server has not been obeyed;
the information recorded on each of the first electronic device (20A) and second electronic device (20B) comprising:
a history of the last transactions which have not yet been validated by said at least one server (30), and
a list of the transactions which have been carried out by the device (20A, 20B) with other electronic devices not yet recorded on said at least one server (30), making it possible for the server to chain each transaction on the device (20A, 20B) to a quantity or a file of another electronic device, even if these transactions have not otherwise been communicated to the server.

2. Method according to the preceding claim, wherein two elements of the system which are selected from among the electronic devices, the one or more servers and the dual readers, are allowed to communicate with one another if they each have the public key corresponding to a private key located on the other element, this private key being either unique and only disposed on said element or shared by other elements of the system, or if they each know the same secret key shared between them, or between them and other elements of the system.

3. Method according to one of the preceding claims, the dual reader (10) comprising a clock, the information inscribed in the first device and second device being timestamped at the moment of the exchange.

4. Method according to any one of the preceding claims, wherein the dual reader transfers quantities inscribed on a register of a first electronic device from or to the register of other electronic devices by ensuring that, at the end of each transfer, certain rules which are present in the dual readers at the moment of transfer are obeyed for each of the initial values of said registers incremented by the quantities received and from which the quantities sent have been subtracted; these rules can notably be to remain greater than or equal to zero and less than a maximum.

5. Method according to any one of the preceding claims, the first secure connection and the second secure connection being temporally superimposed.

6. Method according to any one of the preceding claims, step a) being preceded by a step where the first device (20A) and/or the second device (20B) communicates information to the reader, notably information relating to an inventory of the documents recorded in the devices so that the reader can integrate them into a menu, and/or the first connection being contact and the second being contactless.

7. Method according to any one of the preceding claims, the human-machine interface of the dual reader (10) comprising a keyboard which makes it possible to enter said information relating to the exchange, and/or the human-machine interface of the dual reader (10) comprising a screen, the system making it possible to display two messages to the bearers of the first device and second device, respectively.

8. Method according to any one of the preceding claims, the electronic devices (20A, 20B) being in the credit card or SIM card format, and/or the secure exchanges with the electronic devices (20A, 20B) taking place in different locations through two dual readers linked by a computer connection, one of the electronic devices preferably having an owner whose identity will be revealed to the holder of the second electronic device before the latter makes the transaction.

9. Method according to any one of the preceding claims, the dual reader serving as a relay for informing said at least one server (30) listing the transactions coming from electronic devices with which they will have communicated, without necessarily having generated said transactions.

10. Method according to any one of the preceding claims, step d) taking place after the transaction.

11. System for implementing the method according to any one of the preceding claims, comprising:
- at least two electronic devices (20A, 20B),
- at least one dual reader (10) comprising means for connecting to each of the devices and preferably a human-machine interface,
- at least one computer server (30) which is able to validate transactions and to which information relating to the exchange can be communicated,
the dual reader being arranged to establish a first secure connection to the first device (20A), establish a second secure connection to the second device (20B), make it possible to enter into the reader, using its interface or an external apparatus which is connected to it, information relating to an exchange to be carried out between the first electronic device (20A) and second electronic device (20B), inscribe, in the first device (20A), information relating to the exchange, inscribe, in the second device (20B), information relating to the exchange, and, failing that, proceed to cancel this exchange, then communicate the information relating to the exchange to said at least one server (30), and
the dual reader (10) being arranged to connect to said at least one server (30), while a transaction is carried out between the two electronic devices, or outside such a transaction, said at least one server (30) notably being accessible by connection to a data network, and notably making it possible to synchronize data of at least one of the electronic devices (20A, 20B) via a computer or a telephone, the validity of the inscription on the first device (20A) being conditional on the inscription on the second device (20B) of the information relating to the exchange; said validity of the inscription on the first device (20A) being communicated, after the inscription on the second device (20B), to the first device (20A) via the dual reader, or subsequently, via the server and then another dual reader, the information relating to the exchange comprising information relating to previous exchanges concerning the same register or the same file, said at least one server (30) cancelling a transaction recorded on the electronic devices (20A, 20B) if the chaining of this transaction to any transaction reveals that at least one rule associated with the transaction and parameterized in a server has not been obeyed;
each of the electronic devices (20A, 20B) being arranged to record a history of the last transactions which have not yet been validated by said at least one server (30) and a list of the transactions which have been carried out by the device (20A, 20B) with other electronic devices not yet recorded on said at least one server (30), making it possible for the server to chain each transaction on the device (20A, 20B) to a quantity or a file of another electronic device, even if these transactions have not otherwise been communicated to the server.

12. System according to Claim 11, the dual reader being arranged to simultaneously make possible contact communication with one of the electronic devices and contactless communication with the other electronic device, and/or the dual reader (10) or the electronic devices (20A, 20B) comprising means of identification of the user, notably a means of identification which is biometric.

13. System according to one of the two Claims 11 and 12, the one or more servers recording all the transactions linked to the account, these transactions being reported to them at the moment of the transactions, or subsequently, or the one or more servers recording all the transactions linked to the account, but also the files and quantities inscribed on the registers of the electronic devices.

14. System according to any one of Claims 11 to 13, the dual reader comprising a physically protected memory, comprising the private key of the dual reader and physical access to which preferably results in its own destruction before the information located therein can be copied therefrom.

15. System according to one of Claims 11 to 14, the dual reader (10) comprising a human-machine interface.
